# EUROPÄISCHE PATENTSCHRIFT

(11) **EP 1 121 412 B1**
(45) Veröffentlichungstag und Bekanntmachung des Hinweises auf die Patenterteilung: **02.07.2003**
(21) Anmeldenummer: 99946004.1
(22) Anmeldetag: 20.08.1999
(51) Int. Cl.: C11D 11/00, C02F 1/68, C02F 3/34

(54) **FETTREINIGUNG MITTELS EINES FETTLÖSUNGSMITTELS**
GREASE CLEANING USING GREASE SOLVENTS
NETTOYAGE DE GRAISSES AU MOYEN D'UN SOLVANT DEGRAISSANT

(30) Priorität: 24.08.1998 DE 19838202; 17.12.1998 DE 19858189
(43) Veröffentlichungstag der Anmeldung: 08.08.2001
(73) Patentinhaber: Ophardt Product GmbH & Co. KG, 47661 Issum (DE)
(72) Erfinder: LORENZ, Hans-Eberhard, D-47623 Kevelar (DE); LANG, Albrecht, D-47661 Issum (DE); LÜLING, Manuel, D-47661 Issum (DE); OPHARDT, Heiner, Vineland, Ontario LOR 2CO CANADA (DE)
(74) Vertreter: Kaewert, Klaus
(86) Internationale Anmeldenummer: EP9906126
(87) Internationale Veröffentlichungsnummer: WO00011130

(56) Entgegenhaltungen:
- EP-A- 0 185 528
- EP-A- 0 546 881
- WO-A-97/07190
- DE-A- 3 906 124
- US-A- 4 810 385
- US-A- 4 940 539
- US-A- 5 171 687
- US-A- 5 284 587
- US-A- 5 520 746
- DATABASE WPI Week 8215 Derwent Publications Ltd., London, GB; AN 1982-29481E XP002127476 "Cleaning composition for drain-pipe" & JP 57 038900 A (NIPPON TEEPOL KK), 3. März 1982 (1982-03-03)

## Beschreibung

Die Erfindung betrifft die Reinigung von Fett mittels Fettlösungsmittel, insbesondere mit Enzymen und Bakterien als Fettlösungsmittel und für die Reinigung von Abwasserleitungen und Fettabscheidern.
In verschiedenen Betrieben fällt in erheblichem Umfang Fett an. Das gilt z.B. für Schlachtereien, Wurst- und Fleichwarenfabriken, Gaststätten, fischverarbeitenden Betrieben, Industriebetrieben, in denen Öle und Fette verarbeitet werden, und Faßwäschereien.
Das anfallende Fett wird als ein wesentliches Problem angesehen. Beispielhaft wird auf die Beschreibung "In Situ Bioremediation of Food-Service Waste Grease" von Bobby F. Dowden verwiesen.
Nach DIN 4041 ist für diese Betriebe ein Fettabscheider vorgeschrieben, damit die eingeleiteten Fette nicht in das öffentliche Abwassernetz/Kanalisation gelangen. Entsprechende Vorschriften finden sich auch in anderen Ländern. Das abgeschiedene Fett muß regelmäßig entfernt werden. Das Fett im Fettabscheider wird zum Teil noch bis heute durch Abschöpfen entfernt. Das Abschöpfen ist eine sehr unappetitliche Arbeit. Hinzu kommen im Fettabscheider Hygieneprobleme vor allem bei tierischen und pflanzlichen Fetten. Schließlich muß das abgeschöpfte Fett entsorgt werden.

Bereits in der Beschreibung von Dowden ist auf den Einsatz von Enzymen zum Fettabbau hingewiesen worden. Seit einigen Jahren gibt es zu der manuellen Reinigung eine biologische Alternative:
Fett abbauende Bakterien und Enzyme werden als Lösung in einer wäßrigen Nährlösung in die Abwasserleitung dosiert Diese wandeln das Fett in harmlose Feststoffe um, die problemlos die Kanalisation passieren können. Diese Technik ist z.B. in der US-PS 5225083 beschrieben, desgleichen in der US-PS 4925564, US-PS 4237003, US-PS 4810385, US-PS 4670149, US-PS 4882059, US-PS 5171687, DE-PS 3906124, EP 0178931A1, EP 185528 A2.

Enzyme und Bakterien kommen in der Natur vor. Sie finden sich auf entsprechendem Nährboden. Zur Suche und Isolierung geeigneter Enzyme und Bakterienstämmen können verderbliche Waren herangezogen werden. Dazu gehören Fleisch und Wurst. Auf den überstehenden Fleisch- und Wurstproben finden sich mehr oder weniger viele Enzyme und Bakterien. Diese Bakterien können isoliert und in Brutkästen vermehrt werden, bis eine technische verwertbare Menge an Enzymen und Bakterien angefallen ist.
Als Nährstoff für die Enzyme und Bakterien ist unter anderem Stärke geeignet. Die Vermehrung der Enzyme und Bakterien ist in Anwesenheit von Feuchtigkeit und mäßiger Wärme sehr erfolgreich.

Die Anwendung von Enzymen und Bakterien in einer wäßrigen Nährlösung ist von Vorteil. Die Technik hat sich jedoch nicht durchsetzen können. Das wird darauf zurückgeführt, daß die bisherige Technik in der Praxis verschiedene Wünsche offen läßt.

Das größte Defizit ist der vergleichsweise geringe Wirkungsgrad im Vergleich mit traditionellen chemischen Rohrreinigungsmitteln und Fettlösungsmitteln.

Ein enzymatisches Reinigungsmittel für Ausgüsse im Haushalt und Gewerbe ist aus der DE-A-3906124 bekannt. Dabei werden Enzymmischungen aus Pektinasen, Amylasen, Cellulasen, Polygalakturanosen, Lipasen und Proteasen eingesetzt. Im Falle der flüssigen Zubereitung der bekannten Reinigungsmittel ist eine Konservierung der Enzyme bis zu deren Einsatz vorgesehen, vorzugsweise mit Sorbinsäure- und Benzoesäure-Salzen. Die Konservierung muß zum Einsatz der Enzyme wieder aufgehoben werden. Das erfolgt mittels enzymtoleranter Tenside. Das Reinigungsmittel ist in 1989 entwickelt worden und konnte sich bis heute nicht durchsetzen.

Gleiches gilt für das Reinigungsmittel, das aus der Druckschrift WO 97/07190 bekannt ist. Auch dort ist der Einsatz von Enzymen zur Reinigung von Milchrückständen vorgesehen. Die Enzyme werden vor dem Reinigungseinsatz einige Zeit in Wasser gelöst, auch erwärmt.

Das Dokument US-A-4 810 385 offenbart einen Behälter mit getrockneten Bakterienkulturen auf einem Füllstoff, der zur Fettreinigung verwendet wird, in dem Wasser durch den porösen Behälter strömt.
DE-A-39 06 124 erläutert ein enzymatisches Reinigungsmittel für Ausgüsse im Haushalt und Gewerbe, wobei zur Verhinderung eines mikrobiologischen Abbaus während der Lagerung der Wirkstoff auf feste Trägerstoffe aufgezogen wird.
WO-A-97/07190 beschreibt ein pulverförmiges Reinigungsgemisch für das Leitungs- und Behältersystem der Milchwirtschaft aus Enzympulver, das kurz vorm Einsatz in erwärmtes Wasser gegeben wird.
EP-A-0 546 881 beschreibt ein wässriges Fettreinigungsverfahren für den Haushalt und die Industrie, das auf biologischem Weg den Fettabbau in Abwässern mittels durchleiten durch einen Feststoffreaktor bewährleistet.
Ein Bakterien beinhaltendes Polymergel löst teilchenförmige oder kolloidale organische Materialien (z.B. Fett) in Abwässern an seiner Gel-Wasser-Oberfläche mittels Enzymen (z.B. Cellulase, Amylase, Protease, Lipase) (siehe US-A-5 284 587). US-A-5 171 687 beschreibt ein Verfahren festes mikrobielles Material in einer Strömungsapparatur bereitzuhalten. Die Bakterien werden in Wasser suspendiert, wo sie in der Lage sind Fett usw. in Abwasserleitungen und -systemen abzubauen.

Die Erfindung will gleichwohl an der Enzym-Technik festhalten, weil die Enzym-Technik ökologische Vorteile verspricht.
Die Erfindung wendet sich dabei einer älteren Überlegung zu. Danach wind enzymhaltige Lösung/Suspension in Abständen in die Abwasserleitung oder in einen Fettabscheider geleitet. Diese Überlegung basiert auf einem preventivem Fettabbau bevor der Fettaufbau zu einer Betriebsstörung kommt. Diese Technik ist jedoch bislang nicht praxisreif geworden.

Deshalb hat sich die Erfindung die Aufgabe gestellt, die Enzym-Technik weiterzuentwickeln. Dabei geht die Erfindung von der Überlegung aus, das Transport- und Lagervolumen zu verringern. Nach der Erfindung wird das mit den Merkmalen des Anspruches 1 erreicht. Das Fettlösungsmittel aus Enzymen und Bakterien wird trocken angeliefert und gelagert und in situ durch Zusammenführung mit Wasser hergestellt, wobei das Wasser und das Trockenkonzetrat zunächst in einen Aktivatorbehälter aufgegeben und dort aktiviert werden und anschließend in die Abwasserleitung und/oder den Fettabscheider geleitet werden. In situ heißt dabei: am Fettabscheider, nach Wahl in Fließrichtung auch vor dem Abscheider, ggfs. unmittelbar am Fettzulauf.
Vorteilhafterweise kann mit der Einspeisung von Fettlösungsmitteln auch eine schädliche Fettablagerung in der Kanalisation ohne Fettabscheider verhindert werden, so daß vom Einbau eines Fettabscheiders abgesehen werden kann, wo das zulässig ist. Die Einspeisung von Fettlösungsmitteln erfolgt dann vorzugsweise möglichst dicht an der Fetteinspeisung in der Kanalisation, spätestens bis zu der Stelle an der mit einem wesentlichen Ausfallen von Fett aus dem Abwasser zu rechnen ist, das ist der Fettabscheider, soweit vorhanden bzw. die Stelle, an der ein Fettabscheider vernünftigerweise positioniert wäre.
Der Anteil des Trockenkonzentrats beträgt im Verhältnis zu einem Liter Wasser z.B. 4 bis 100 Gramm. Dabei hat ein ggfs. eingemischter Füllstoff erhebliche Bedeutung. Der Füllstoff kann Sägemehl sein.
Die Gewinnung des Trockenkonzentrats erfolgt vorzugsweise durch Gefriertrocknung und nicht durch Erhitzung der Nährflüssigkeit, in der die Enzyme und Bakterien gezüchtet werden, weil die Enzyme und Bakterien nur in geringem Umfang mit Wärme belastbar sind. Vorteilhafterweise verbleibt der für die Zucht der Enzyme bzw. Bakterien verwendete Nährstoff bei der Trocknung im Konzentrat, so daß für die Aktivierung der Enzyme und Bakterien nur wieder Wasser/Feuchtigkeit zugeführt werden muß.

Die erfindungsgemäße Verfahrensweise basiert auf der Erkenntnis, daß das Fettlösungsmittel in der wäßrigen Lösung nur einen geringen Prozentsatz ausmacht. Durch Reduzierung des Transportes und Vorratshaltung auf ein Trockenkonzentrat verringern sich die Kosten für die Verpackung und Anlieferung dramatisch. Während herkömmliche Flüssigmittel wegen ihres Volumens und ihres Gewichtes mit Lkw bzw. mit Spedition angeliefert werden, kann das erfindungsgemäße Trockenkonzentrat trotz spezifisch höherer Transportkosten wegen des geringen Gewichtes mit sehr großen absoluten Kostenvorteilen mit der Post transportiert werden. Im Ergebnis entfaltet die erfindungsgemäße Verfahrensweise große Vorteile.

Mit geringerem wirtschaftlichen Vorteil läßt sich auch ein Flüssigkonzentrat anliefern und in situ mit Wasser verdünnen. Gleichwohl ist diese Technik (Flüssigtechnik) nicht mit der Anwendung von Trockenkonzentrat (Trockentechnik) vergleichbar, weil bei der Flüssigtechnik eine umfangreiche Kühlung des Konzentrats bei Lagerung und Transport stattfinden muß. Sonst kommt es zu einer unerwünschten Aktivierung der Enzyme und Bakterien. Die weitere Lebensfähigkeit der Enzyme und Bakterien hängt dann von einem ausreichenden Nahrungsangebot ab. Zwangsläufig ist das Nahrungsangebot im Flüssigkonzentrat bald aufgebraucht, so daß die Enzyme und Bakterien im Falle einer Aktivierung bei der Lagerung und dem Transport bald unbrauchbar werden.

Der Begriff des Trockenkonzentrats schließt nach der Erfindung Restfeuchten nicht aus. Je größer der Trocknungsgrad ist, desto geringer ist die Gefahr unerwünschter Aktivierung der Enzyme und Bakterien.

In weiterer Ausbildung der Erfindung erfolgt die Zusammenführung von Trockenkonzentrat und Wasser dicht/unmittelbar an der Einleitung des Fettlösungsmittels in das Abwasser, so daß eine Suspension oder eine Lösung entsteht. Dabei wird ggfs. durch einen Vorlauf der Herstellung gegenüber dem Einleitungszeitpunkt die notwendige Herstellungszeit berücksichtigt. Zu der Herstellungszeit gehört insbesondere die Aktivierungszeit für die Enzyme und Bakterien, desgleichen eine Zeit zur Lösung/Verteilung des Trockenkonzentrats. Die Zeit zur Lösung in Wasser wird um so geringer, je feiner die Körnung des Trockenkonzentrats ist. Wahlweise wird die Feinheit durch mechanische Zerkleinerung erhöht. Als Zerkleinerung eignet sich eine Mahlung.
Für die Herstellung des Konzentrats aus einer Nährflüssigkeit ist die Gefriertrocknung das bevorzugte Verfahren. Bei unkontrollierter Formbildung während der Gefriertrocknung fallen unterschiedliche Partikel an. Dem kann zwar durch Mahlung abgeholfen werden.
Übergroße Partikel können auch durch eine kontrollierte Formgebung vermieden werden. Das kann während oder nach der Gefriertrockung durch Pelletisierung erfolgen. Pellets entstehen z.B. zwischen zwei Walzen. Solche walzen sind an der Oberfläche entsprechend profiliert, d.h. mit entsprechenden Vertiefungen versehen. In die Vertiefungen wird das Konzentrat gepreßt. Besonders geeignete Formen für das Pelletisieren mit Walzen sind Linsenformen. Die zugehörigen Vertiefungen in den Walzenoberflächen sind kalottenförmig.

Ein anderes Pelletisierungsverfahren beinhaltet das Pressen des Ausgangsmaterials durch Düsen. Der entstehende Materialstzang wird granuliert(zerkleinert).
Sowohl beim Pelletisieren mit Walzen als auch beim Pelletisieren mit Düsen und Granulieren fällt in der Praxis zwar in der Hauptsache Material mit einer vorbestimmten Abmessung an. Aus Rändern/Graten und zerschlagenem Pelletmaterial fällt aber auch mehr oder weniger feines Korn an. Vorzugsweise wird unerwünschtes Korn (Unterkorn) abgesiebt oder in sonstiger Weise durch Klassieren von dem gewünschten Korn getrennt.

Das Klassieren hat noch größere Bedeutung bei dem oben angesprochenen Mahlen. Dabei wird vorzugsweise nicbt nur Unterkorn sondem auch Überkorn ausklassiert. Das Überkorn wird einem erneuten Mahlvorgang unterzogen.

Bevorzugte Pelettgrößen und entsprechende Grobkörner besitzen einen Durchmesser von 2 bis 4 mm.

Für alle Pelletisierungsvorgänge ist eine Restfeuchte des Trockenkonzentrats von großem formgebenden und formhaltenden Vorteil. Soweit ein darüber hinausgehender Trocknungsgrad erwünscht ist, werden die Pellets einer weiteren Trockung unterworfen.

Im Wasser beginnt die Aktivierung. Mindestens ist für die Aktivierung eine Zeit von 0,5 Stunden erforderlich. Aktivierung heißt im Sinne der Erfindung Vermehrung der Enzyme und Bakterien, bis das Fettlösungsmittel eine gewünschte Fettabbauleistung zeigt.
Je größer der Anteil an Konzentrat im Wasser ist, desto schneller liegt ein ausreichend wirksames Fettlösungsmittel vor. In der Regel ist keine längere Aktivierungszeit als 24 Stunden vorgesehen.

Bevorzugt ist die Lösung des Konzentrats in Wasser, die ohne besondere Maßnahmen stabil bleibt. Bei Erzeugung einer Suspension oder Lösung kann in bekannter Weise mit Hilfe eines Rührwerkes eine gleichmäßige Verteilung des Konzentrats in der Suspension oder Lösung gewahrt werden. Solche Maßnahmen können entfallen, wenn die Herstellung der Suspension oder Lösung zeitlich mit geringem Abstand vor der vorgesehenen Einleitung des Fettlösungsmittels erfolgt, so daß eine nachteilige Entmischung/Ablagerung des Konzentrats nicht zu befürchten ist. Geringe Enimischungen/Ablagerungen werden beim Ausströmen des Fettlösungsmittels mit ausgetragen. Die zeitlichen Entmischungsgrenzen lassen sich mit einer geringen Zahl von Versuchen festlegen.

Alternativ odcr zusatzlich kann vor der Einleitung des Fettlösungsmittels eine Badbewegung in dem Aktivatorbehälter für die Herstellung der Suspension oder Lösung erzeugt werden, durch die entstandene Ablagerungen aufgewirbelt werden.

Die erfindungsgemäß hergestellte Suspension oder Lösung kann in gleicher Weise wie herkömmliche Flüssigmittel eingeleitet werden.

Vorzugsweise wird die in situ hergestellte Suspension oder Lösung intermittierend aufgegeben. Wahlweise werden dabei bestimmte Zeiten eingehalten oder es werden die Zeiträume in Anpassung an den Fettanfall gewählt. Der Fettanfall läßt sich z.B. mit einem Durchflußmeßgerät feststellen. Die Messung kann sich darauf beschränken, ob überhaupt eine Strömung stattfindet. Die Messung kann auch die Größenordnung der Strömung feststellen. Mit Hilfe eines Rechners läßt sich die notwendige Fettlösungsmittelmenge dann relativ genau bestimmen und die Dosierung steuern. Die Dosierung kann eine volumensmäßige und/oder gewichtsmäßige Portionierung des Trockenkonzentrats und/oder des Fettlösungsmittels beinhalten.
Soweit das Fett im wesentlichen im Fettabscheider anfällt, ist es von Vorteil, die Fettlösungsmittelmenge so einzustellen, daß nur in geringem Umfang oder gar kein Fettlösungsmittel im Fettabscheider sofort überfließt und ungenutzt weiterfließt.
Soweit kein Fettabscheider mit einem Sammelbehälter vorgesehen ist, in dem Abwasser steht, wird die Fettlösungsmittelmenge vorzugsweise so bemessen, daß eine gerade eine ausreichende und keine übermäßige Benetzung der mit Fett belasteten Kanalflächen bzw. Abwasserleitungsflächen erfolgt.
Wahlweise erfolgt die Dosierung des Fettlösungsmittels auch durchflußmengenunabhängig allein zeitlich.
Der Zeitpunkt der Dosierung kann unterschiedlich gewählt werden. In Gaststätten kann die Fettlösungsmitteleinleitung z.B. nach dem Mittagstisch bzw. am Schluß des Küchenbetriebes in der Nacht erfolgen. Dabei kann eine dem Fettanfall angepaßte, erfahrungsgemäß ggfs. auch versuchsweise festgelegte Fettlösungsmittelmenge eingeleitet werden. Eine versuchsweise Festlegung der notwendigen Fettlösungsmittelmenge kann z.B. durch Mengenveränderung/Mengenerhöhung/Mengenreduzierung und Vergleich des Fettanfalls im Fettabscheider bei den Versuchen ggfs. auch mit früherem Fettanfall erfolgen.
Besonders günstige Reinigungsergebnisse können in Zeiten der Betriebsruhe erwartet werden. Dann steht dem Fettlösungsmittel die längste Einwirkungszeit zur Verfügung, bevor das Fettlösungsmittel durch nachfolgendes Abwasser weggeschwemmt wird.

Wie oben beschrieben, kann der Ablagerung von Fett auch ohne Meßeinrichtungen wirksam begegnet werden.
Im übrigen ist die häufigere Betätigung der erfindungsgemäßen Dosierung/Fettlösungsmitteleinleitung für den Betrieb von Vorteil. Sie wirkt Ablagerungen im Gerät entgegen.

Für die erfindungsgemäße, vereinfachte Fettlösungsmitteleinleitung ohne Meßeinrichtung eignet sich ein Zeitschalter, z.B. in Form einer Uhr, deren Schaltintervalle einstellbar sind. Solche Zeitschalter besitzen vorzugsweise mehrere Schaltintervalle.

Zum Dosieren des Trockenkonzentrats kommen unterschiedliche Vorrichtungen in Betracht, Vorrichtungen mit linearer Dosierbewegung und Vorrichtungen mit zirkularer Dosierbewegung.

Vorzugsweise wird das Trockenkonzentrat aus einem Vorratsbehälter mit einer Dosiertrommel in das für die Lösung oder Suspension bestimmte Wasser eindosiert. Die Dosiertrommel kann eine oder mehrere Ausnehmungen/Taschen aufweisen, in die von oben aufgrund der Schwerkraft das Trockenkonzentrat eindringt und nach Drehung der Trommel aufgrund der Schwerkraft wieder herausfällt. Jede Tasche kann so bemessen sein, daß eine einzige Füllung für die Herstellung der gewünschten Suspension oder Lösung ausreicht. Die Taschen in der Trommel können auch so bemessen sein, daß die Füllung und Entleerung mehrerer Taschen oder mehrere Befüllungs- und Entleerungsvorgänge erforderlich sind, um die für eine gewünschte Suspension oder Lösung notwendige Konzentratmenge einzudosieren. Mit einer solchen Dosiervorrichtung läßt sich unterschiedlichen Konzentratmengenanforderungen ohne weiteres Rechnung tragen.

Bei einer einzigen Tasche in der Dosiertrommel ist regelmäßig eine Trommeldrehung von 18O Grad erforderlich, um von einer vertikalen Füllstellung in die vertikal darunter liegende Entleerungsstellung zu gelangen. Bei vertikaler Stellung ergeben sich optimale Füllbedingungen und Entleerungsbedingungen. Brauchbare Füllbedingungen und Entleerungsbedingungen ergeben sich auch noch bei Abweichungen von 30 Grad von der Vertikalen.
Es ist von Vorteil, wenn die Dosiertrommel zwischen der Füllstellung und der Entleerungsstellung in einem geschlossenen Gehäusemantel gleitet, der eine unerwünschte Entleerung verhindert, und/oder wenn die Dosiertrommel in einer bestimmten Stellung bleibt. Das kann die Entleerungsstellung oder die Füllstellung oder eine Stellung dazwischen sein.

Bei mehreren Taschen am Umfang der Dosiertrommel ergibt sich eine kürzere Trommeldrehung zwischen zwei Entleerungsvorgängen.
Alternativ zur Dosiertrommel kann auch ein Zellenrad zum Einsatz kommen. Das Zellenrad besitzt im Unterschied zur Dosiertronamel zwischen zwei Taschen nur dünne Wände. Die dünnen Wände stellen zunehmende Anforderungen an die Steuerung des Rades und an die Abdichtung. Beim normalen Zellenrad entstehen Genauigkeitsprobleme und Probleme des Eindringens von Feuchtigkeit in den Vorratsbehaiter für Konzentrat.
Deshalb findet das Zellenrad nach der Erfindung vorzugsweise nur beschränkte Anwendung, nämlich dann, wenn die Taschen zwischen zwei benachbarten Wänden ein geringes Volumen besitzen, so daß eine Vielzahl von Taschen gefüllt und entleert werden müssen, um zu einer gewünschten Konzentratrnenge zu kommen. Bei geringem Taschenvolumen werden Positionierungsfehler/Steuerungsfehler des Zellenrades und dadurch bedingte Schwlerigkeiten bei der Abdichtung des Zellenrades gemildert, weil es nur darauf ankommt.
wieviel Konzentrat aus der für einen Dosierungsvorgang bestimmten ersten Tasche bereits unerwünscht abgeflossen ist und
wieviel Konzentrat aus der Tasche noch zufließt, die der Tasche nachfolgt, welche für
die gewünschte Konzentratmenge zuletzt entleert wird.
Im Unterschied zu dem Zellenrad ergeben sich an der Dosiertrommel wesentlich größere Umfangsflächen, die als Dichtflächen genutzt werden können und auch bei erheblichen Steuerungstoleranzen eine gute Abdichtung gewährleisten, weil die Dichtlippen immer die Umfangsflächen treffen.

Für die Dosiertrommel ist als Antrieb ein Schrittschaltmotor brw. ein Schrittmotor von Vorteil, wobei der minimale Schaltschritt kleiner oder gleich der kleinsten Trommeldrehung zwischen zwei Entleerungsvorgängen bzw. zwischen zwei Befüllungsvorgängen ist.

Je nach Anzahl der Taschen am Trommelumfang und je nach Betriebsweise kann die Trommeldrehung verschieden sein.
Bei einer einigen Tasche kann jeder Schaltschritt eine 180-Grad-Drehung sein. Bei geringer Drehgeschwindigkeit und mehrmaliger Befüllung und Entleerung zur Darstellung einer gewünschten Konzentratmenge kann ein Schaltschritt eine mehrmalige Umdrehung ohne zwischenzeitliche Unterbrechung beinhalten.
Vorteilhafterweise eröffnet die Erfindung die Möglichkeit zum Einsatz gleicher Dosiertrommeln oder Zellenrädern für unterschiedliche Anwendungsfälle und eine Anpassung der Dosierung durch Änderung der Zahl der Füll- und Entleerungszyklen.

Von Vorteil ist für die Dosiertrommel, wenn der Motor mit einer Schrittsteuerung versehen ist bzw. ein impulsgesteuerter Schrittmotor verwendet wird. Die Steuerung ist vorzugsweise elektronisch und schließt die Drehzahlmessung und/oder eine Schwenkwinkelmessung ein. Auch ein links- und zugleich rechtsdrehender und/oder ein drehzahlregelbarer Motor eröffnet Vorteile.

Mit einem solchermaßen steuerbaren Antrieb läßt sich die Dosiertrommel nach jedem Entleerungsvorgang wieder zurück in die Füllstellung odcr in eine Stellung zwischen der Füllöffnung und der Entleerungsöffnung bringen, desgleichen in bestimmte Entleerungsstellungen und Füllstellungen, in denen die Tasche schräg steht und eine Einlaufoder Ablaufschräge bildet. Ferner läßt sich die Schüttvorgang durch Veränderung der Schüttgeschwindigkeit beeinflussen. Damit können Wasserspritzer reduziert werden.

Das Trommelgehäuse besitzt wahlweise einen durchgehenden Schacht. Die Dosiertrommel sitzt dann als Verschlußorgan drehbeweglich in dem Schacht.
Als Antrieb für die Dosiertrommel wird ein kleiner Motor empfohlen, dessen Bewegung mittels eines Getriebes untersetzt wird.
Wahlweise ist das Getriebe zugleich als Dosiertrommelsteuerung ausgebildet, indem ein drehbeweglich gelagerter Zahnradring verwendet wird, der von einem Ritzel auf der Antriebswelle des Motors bewegt wird. Der Zahnradring kann zugleich als Kurvensteuerung dienen, wenn er ausreichende Abmessungen zur Anbringung von Kurven besitzt.

Für die Dosiertrommel sind vorzugsweise zusätzliche Dichtungen vorgesehen, die ein Eindringen von Feuchtigkeit in den Vorratsbehälter verhindern sollen. Die Dichtungen können sich aus handelsüblichen O-Ringen und geradlinigen Dichtleisten zusammensetzen. Es können aber auch einstückig hergestellte Dichtungen zum Einsatz kommen.
Den größten Wirkungsgrad haben die Dichtungen an der Auslauföffnung des Schachtes. Don sind die Dichtungen im Spalt zwischen Trommel und Gehäuse vorgesehen.

Bei dem Einsatz von Pellets bzw. grobkörnigem Trockenkonzentrat können Dichtungen aus Gummi mit ihrem Rückstellvermögen die einzelnen eindringenden Körner aus dem Dichtungsspalt herausschleudern. Bei dem Einsatz von pulverförmigem Trockenkonzentrat können auch Dichtungen aus thermoplastischem Material zum Einsatz kommen, die nicht das Rückstellvermögen von Gummi haben.

Eine andere Variante der Dosierung bietet ein Linearfeeder.
Ein erfindungsgemäßer Linearfeeder bewegt das Trockenkonzentrat geradlinig.
Dazu ist ein Zylinder mit einer hin- und hergehend bewegten Kolbenstange und zwei darauf angeordneten Kolben vorgesehen. Der Zylinder ist so an den Vorratsbehälter angeschlossen, daß die Kolbenstange unter Öffnung des Zylinders in das Trockenkonzentrat hineinstoßen kann. Günstig ist, wenn das Trockenkonzentrat von unten aus dem Vorratsbehälter abgezogen wird. Dann kann das Trockenkenzentrat aufgrund seiner Schwerkraft in den Zylinder laufen. Der Zylinder ist dabei durch den zweiten Kolben unten verschlossen.
Nach der Zylinderfüllung wird die Kolbenstange mit den beiden Kolben zurückgezogen, bis der dem Vorratsbehälter abgewandte Kolben aus dem Zylinder heraustritt. Damit öffnet sich der Zylinder und das Trockenkonzentrat kann in den Aktivatorbehälter abregnen.
Günstig ist, wenn der Zylinder dicht an den Vorratsbehälter angeschlossen ist.
Die Kolben bilden dann zugleich einen Verschluß für den Vorratsbehälter. Der Verschluß ist wichtig, um das Trockenkonzentrat trocken zu halten. Vorteilhaft ist eine einteilige Ausbildung des Zylinders mit dem Vorratsbehälter.
Die Verbindung mit dem Aktivatorbehälter ist wahlweise gleichfalls dicht oder aber mehr oder weniger offen. Günstig ist, wenn der Zylinder in die Eintrittsöffnung des Aktivatorbehälters hineinragt. Dadurch wird verhindert, daß austretendes Trockenkonzentrat neben die Eintrittsöffnung des Aktivatorbehälters fällt.

Die Kolben besitzen wahlweise eine herkömmliche Bauweise.
Alternativ ist vorgesehen, daß die Kolben durch zwei Dichtungsschelben gebildet werden. Der dem Vorratsbehälter zugewandte Kolben kann eine scheibenförmige Ausbildung haben.

Für den anderen Kolben ist vorzugsweise eine hutförmige oder pilzförmige oder kegelförmige Ausbildung vorgesehen, so daß dieser Kolben Ablaufschrägen für das Trockenkonzentrat besitzt.
Zusätzlich kann die untere Dichtungsscheibe eine Membran bilden, so daß sie insgesamt nachgiebig ist und mit Dichtlippen schließend an der Zylinderinnenwand anliegt.
Auch der andere als Dichtungsscheibe ausgebildete Kolben kann eine Membran bilden bzw. mit Dichtlippen versehen sein. Ggfs. ist die obere Dichtungsscheibe zusätzlich mit einem O-Ring versehen.
Die Dichtung wird erhöht, wenn die Kolbenstange zwischen zwei Dosiervorgängen in einer Stellung verbleibt, in der sich beide Kolben im Zylinder befinden.

Die beiden Dichtungsscheiben lassen sich mit der Kolbenstange als Kunststoffspritzteil anfertigen. Das ist bei größeren Serien extrem kostengünstig.

Der Antrieb der Kolbenstange kann von oben durch den Vorratsbehälter hindurch erfolgen. Dem steht auch eine geschlossene Hülle des Vorratsbehälters nicht entgegen, wenn die Hülle ausreichend nachgiebig ist und die Kolbenstange von oben mit der Hülle erfaßt werden kann oder in anderer Weise mittelbar über die flexible Hülle eine Verbindung des Kolbenstangenantriebes mit der Kolbenstange herbeigeführt werden kann.

Der Antrieb kann auch seitlich angeordnet sein und auch durch den zu diesem Zweck geschlitzten Zylinder hindurchgreifen.
Der Antrieb kann aber auch von unten erfolgen. Zwar kann der Antrieb dazu unterhalb des Zylinders und sogar als Einbau im Aktivatorbehälter angeordnet sein. Vorzugsweise ist jedoch ein unten aus dem Zylinder herausgeführtes Gestänge vorgesehen, daß zu einem seitlich angeordneten Antrieb führt.

Der Antrieb kann durch einen Zahnriemenantrieb oder einen Linearmotorantrieb oder einen Hubzylinderantrieb oder einen Spindslantrieb oder einen Zahnstangenantrieb gebildet werden. Mit dem erfindungsgemäßen Linearfeeder lassen sich die gleichen Dosierzyklen wie mit der Dosiertrommel durchführen.

Die Herstellung der Suspension oder Lösung erfolgt insbesondere in einem Aktivatorbehälter, in dem Wasser und Konzentrat zusammengeführt werden. Der Aktivatorbehälter kann eine runde Form besitzen, die für eine Bewegung, hier eine Drehbewegung, des Bades günstig ist. Wahlweise ist der Aktivatorbehälter zusätzlich mit Einbauten versehen, welche eine Verwirbelung der gesamten Behälterfüllung begünstigen. Die Bewegung kann durch Eindüsen des Wassers erzeugt werden, ggfs, auch durch mechanische Rührwerke.
Von Vorteil ist, mindestens eine Düse in dem Bereich anzuordnen, in dem das Konzentrat mit dem Wasser zusammengeführt wird.
Das Konzentrat kann vor oder nach dem Wasser oder gleichzeitig mit dem Wasser aufgegeben werden.
Das Konzentrat und das Wasser können unterschiedlich aufgegeben werden. z.B. kann das Konzentrat nach Eindüsen einer ersten Wassermenge vor der Restwassermenge eingefüllt werden. Vorzugsweise ist mindestens eine Düse oben am Aktivatorbehälter vorgesehen. Die Düse kann unter dem Behälterrand befestigt werden. Günstig ist eine Schrägstellung der Düse.
Ziel ist wahlweise eine möglichst großflächige Beregnung oder Benetzung und/oder eine Verwirbelung der Suspension oder Lösung. Für die großflächige und gleichmäßige Beregnung eignen sich besonders schlitzförmige Düsen oder Düsenfelder. Für eine intensive Verwirbelung ist eine intensive Badbewegung von Vorteil. Diese Badbewegung wird vorzugsweise durch eine einzige oder mehrere gebündelte Düsen erreicht.

Mindestens eine Düse kann auch am Behälterauslauf angeordnet werden. Am Behälterauslauf sind Ablagerungen besonders störend. Deshalb wird der Behälterauslauf mit der dort angeordneten Düse frei gespült. Die dort vorgesehene Düse kann gleich oder ähnlich wie die oben am Behälterrand vorgesehene Düse angeordnet sein und wirken, so daß es zu einer Aufwirbelung von Ablagerungen vor Öffnung des Behälterauslaufes kommt.

Die zur Betätigung der Düsen notwendige Frischwassermenge wird beim vorherigen Befüllen des Aktivatorbehälters berücksichtigt. D.h. die Wassermenge wird um die für das spätere Betätigen der Düsen erforderliche Frischwassermenge reduziert (vorläufiger Füllstand). So wird ein Überlaufen des Aktivatorbehälters verhindert.

Eine weitere Funktion der Düsen ist die Reinigung des Aktivatorbehälters nach der Entleerung durch weitere Wasserbeaufschlagung.
Wahlweise ist das Mischwasser für die Suspensions/Lösungsherstellung so bemessen, daß nach der Entleerung durch ablaufendes Wasser aus der Reinigung des Aktivatorbehälters nur eine zulässige Verdünnung der Suspension oder Lösung entsteht. Das gilt für die Einleitung der Suspension oder Lösung in eine reinigungsbedürftige Abwasserleitung.
Bei der Einleitung der Suspension oder Lösung in einen zu reinigenden Fettabscheider kommte es zumindest bei großvolumigen Abscheidern nicht auf die Reinigungswassermenge an.

Für die Einstellung des Füllstandes, sowohl des maximalen Füllstandes als auch des vorläufigen Füllstand stehen verschiedene Lösungen zur Verfügung. Eine übliche, bewährte Lösung ist die Verwendung von Niveauschaltern. An sich sind Schwimmschalter die typischen Niveauschalter. Nach der Erfindung kommen vorzugsweise kapazitive Schalter zum Einsatz, die außen am Aktivatorbehälter angebracht sind. Die Anbringung außen verringert die Anzahl der Einbauten im Aktivatorbehälter und den Wartungsbedarf.
Eine andere Lösung ist eine Zeitschaltung. Die Zeitschaltung ist eine mögliche Lösung, weil sowohl für das Erreichen des maximalen Füllstandes als auch für das Erreichen des vorläufigen Füllstandes bei gleichbleibenden Wasserzulaufbedingungen bestimmte Füllzeiten gemessen werden können. Zwar sind nicht alle Wasserzulaufbedingungen absolut gleichbleibend. Der Wasserdruck kann erheblich schwanken. Gleichwohl bleiben die meßbaren Zeiten in relativ engen Grenzen, so daß diese Zeiten über eine Schaltuhr zur Abschaltung des Wasserzulaufes genutzt werden können. Wahlweise kann für diese Schaltvorgänge und für die Schaltvorgänge im Zusammenhang mit der Zuführung von Konzentrat eine gemeinsame Schaltuhr verwendet werden, die eine ausreichende Zahl von Schaltkontakten besitzt.

Für den Fall einer Betriebsstörung in der Abschaltung des Wasserzulaufes ist ein Überlauf vorgesehen. Der Überlauf ist wahlweise mit dem Behälterauslaß kombiniert. Eine vorteilhafte Ausführung sieht einen Hohlstopfen als Verschluß für den Behälterauslaß vor. Dem Hohlstopfen ist eine solche Länge gegeben, daß sein oberes Ende mit dem maximalen Füllstand abschließt und ggfs. anfallendes Überschußwasser oben in den Hohlstopfen ablaufen kann.
Der Hohlstopfen wird wahlweise mit einem Gestänge oder durch eine ringförmige am Fuß des Stopfens angeordnete Hubeinrichtung angehoben und geführt. Als Hubantrieb eignet sich ein Magnet, weil für die Betätigung des Behälterauslaufes nur ein relativ geringer Hub erforderlich ist.

Für die Wirkung des Hohlstopfens ist eine Dichtung am unteren Ende förderlich.

Oben ist der als Überlauf wirkende Hohlstopfen mit einer kegelförmigen Abdeckung versehen, um den Verlust an Trockenkonzentrat durch den Hohlstopfen/Überlauf hindurch zu vermeiden. Die Kegelform soll aufregnendes Trockenkonzentrat abgleiten lassen.
Soweit das unerwünscht ist, läßt sich das dadurch beseitigen, daß die Auslauföffnung des Vorratsbehälters seitlich versetzt wird und sich nicht mehr über der Einlauföffnung des Aktivatorbehälters befinden. Umgekehrt kann auch die Einlauföffnung versetzt werden. Im Verhältnis zur Mitte ergibt sich eine Exzentrizität.

In einer anderen Variante der Erfindung wird ein vorteilhafter Akrivatorbehälter geschaffen. Dabei geht die Erfindung von der Erkenntnis aus, daß es für die Aktivierung der Enzyme und Bakterien von Vorteil ist, wenn die Mischung eine Zeit lang im Aktivatorbehälter verbleibt und dabei eine Bewegung erfährt. Zwar ist eine umlaufende Bewegung bereits günstig, wie sie durch ein Rührwerk und die oben beschriebene Bauart erzeugt werden kann. Noch besser ist ein zusätzlicher vertikaler Umlauf des Bades.
Dabei wird die Bewegungsgeschwindigkeit wahlweise begrenzt. Dem liegt die Erkenntnis zugrunde, daß einige Enzyme und Bakterien einer hohen mechanischen Belastung bei hoher Pumpendrehzahl nicht gewachsen sind und zerschlagen, zumindest im Wachstum gestört werden.
Nach der Erfindung ist in solchen Fällen eine Reduzierung der üblichen Drehzahl von 3000 Upm vorgesehen. Je nach Pumpenbauart kann die maximale Drehzahl für empfindliche Enzyme und Bakterien 1500 Upm, für noch empfindlichere Enzyme und Bakterien 500 Upm und für höchst empfindliche Enzyme und Bakterien 100 bis 300 Upm betragen.
Von besonderem Vorteil ist dabei eine Pumpe mit regelbarer Drehzahl.

Zusätzliche Vorteile ergeben sich bei einer kontrollierten, an sich bekannten Luftzugabe. Es läßt sich die richtige Luftzugabe durch wenige Versuche mit Erhöhung und Reduzierung der Luftzugabe ermitteln.

Auch wenn eine gewünschte Mischung bereits in kürzester Zeit, z.B. in einer Minute erreicht wird, bedingt das gewünschte Wachstum der Enzyme und Bakterien einen längeren Aufenthalt im Aktivatorbehälter. In der Regel ist die Aufenthaltsdauer mindestens 0,5 h, aber nicht länger als 24 h.

Die Vertikalbewegung läßt sich wahlweise durch ein Abzichen der Suspension/Lösung im Bereich des Bodens und Rückführung der Flüssigkeit im obcren Behälterbereich verwirklichen.
Bcvorzugt wird die erfindungsgemäße Vertikalbewegung dadurch erzeugt, daß die Flüssigkeit altein im Behälter einen Antrieb in vertikaler Richtung erfährt. Nach der Erfindung kann dazu ein am Behälterboden angeordneter und an sich ungeeigneter Pumpenkreisel/Läufer/Flügelrad genutzt werden. Solche Kreisel/Läufer/Räder sind für die Vertikalbewegung an sich ungeeignet, weil sie ein umlaufendes Rührwerk bilden und lediglich eine Drehung der Flüssisgkeit in der Ebene verursachen.
Nach der Erfindung wird gleichwohl eine Vertikalbewegung erzeugt, weil der Behälter nach der Erfindung mit strömungsführenden Einbauten bzw. Profilen versehen ist. Die Einbauten bzw. Profile bilden vorzugsweise vertikal verlaufende Rippen. Die Höhe der Rippen wird nach der Erfindung im Verhältnis zu den Behälterabmessungen gewählt. Bei kreisrundem Behälter beträgt die Rippenhöhe bzw. deren Steghöhe mindestens 10% und höchstens 50% vom Radius des Behälters. Größere Steghöhen sind zwar möglich und größtenteils unschädlich, werden aber als unwirtschaftlich angesehen.
Die Rippen erstrecken sich an der Behälterinnenwand entlang und fangen vorzugsweise am Behälterboden an. Oben können die Rippen einen Abstand vom Behälterdeckel haben. Der Abstand soll vorzugsweise mindestens ¼ des Behälterdurchmessers sein, die Rippenlänge maximal ¾ des Behalterdurchmessers.
Mittig besitzen die Kreisel/Läufer/Räder eine Ansaugöffnung. Durch die drehende Bewegung wird die eingedrungene Suspension/Lösung radial nach außen geschleudert. Es entsteht mittig, an der Ansaugöffnung ein Unterdruck. Von oben wird Suspension/Lösung angesaugt und nach unten gezogen. Zugleich wird die radial nach außen gedrückte Suspension/Lösung nach oben gelenkt, um am Badspiegel bsw. unterhalb des Badspiegels wieder zur Mitte hin zu strömen. Es entsteht eine Strömungswalze.

Die erfindungsgemäße Kreisel/Läufer/Räder bilden innen angeordnete Pumpen. Anstelle dieser Pumpen können auch extern angeordnete Pumpen treten oder mit den innen angeordneten Pumpen zusammenwirken.

Eine erfindungsmäße Strömungswalze entsteht bei den oben beschriebenen Pumpenkreiseln/Läufern/Rädern auch ohne strömungslenkende Einbauten durch geneigte Anordnung des Aktivatorbehälters.

Der Behälterdurchmesser kann in weiten Grenzen variieren. Bevorzugte Ausführungsbeispiele besitzen einen Behälterdurchmesser von 200 mm. Die Behälterlänge/Höhe beträgt bei erfindungsgemäßer Kreisel/Lläufer/Flügelrad-Anordnung am Behälterboden nicht mehr als das 8fache des Behälterdurchmessers. Günstige Verhältnisse ergeben sich bei einem Verhältnis von 1:1 von Behälterdurchmesser zur Behälterlänge bzw. Höhe. Zugleich sind die verfahrensmäßige Mengenvorgabe an Wasser und der bauliche Aufwand sowie der Lageraufwand für die Pumpenkreisel/Läufer/Räder-Durchmesser zu berücksichtigen. Nach der Erfindung wird deshalb auf einen einzigen (höchstens drei) Kreisel/Läufer/Raddurchmesser, z.B. auf 200 mm, abgestellt und das gewünschte Behältervolumen durch entsprechende Verlängerung bzw. Verkürzung der Behälterlänge/Höhe erreicht. Vorzugsweise beträgt der Kreisel/Läufer/Flügelraddurchmesser 100 bis 300 mm.

Ein weiterer Parameter des erfindungsgemäßen Pumpenkreisels/Läufers/Flügelrades ist dessen Höhe über der Behältersohle. In bevorzugter Bauweise beträgt die Höhe 10 bis 30 mm, z.B. 20 mm. Die Höhe kann in Abhängigkeit von der Behälterhöhe variiren. Mindestens ist das Verhältnis von Höhe des Pumpenkreisels/Läufers/Flügelrades zur Behälterhöhe 1:30, maximal 1:3.

Nach Erreichen der gewünschten Aktivierung/Wachstum der Enzyme und Bakterien im Aktivatorbehälter wird die Suspension/Lösung dem vorgesehenen Einsatz zugeführt. Zur Sicherung einer kurzfristigen Entleerung wird die Suspension/Lösung wahlweise abgepumpt. Die Pumpe kann einen weiteren Pumpenkreisel/Läufer/Flügelrad für andere Zwecke besitzen. Vorzugsweise wird der weitere Pumpenkreisel/Läufter/Flügelrad für die Umwälzung bzw. Mischung des Bades zur Beschleunigung des Wachstums genutzt.
Vorteilhafterweise können die Organe beider Pumpen auf dcr gleichen Welle sitzen. D.h. der Pumpenkreisel/Läufer/Rad für die Umwälzung/Mischung des Bades im Behälter und der Pumpenkreisel/Läufer/Rad für den Suspensions/Lösungsabzug bzw. die Entleerung sitzen auf einer Welle/Achse. Dabei ist ohne Kupplung und Schaltung eine feste Anordnung möglich, wenn das Organ der Pumpe für den Suspensionsabzug/Entleerung unter dem Organ der Pumpe für den Suspensionsabzug bzw. Suspensionsmischung angeordnet ist und wenn die Organe lediglich in einer Drehrichtung eine Förderwirkung entfalten. Die Förderwirkung in nur einer Drehrichtung entsteht durch Freilauf auf der Welle in der Nichtförderrichtung oder durch eine spezielle Form der Organe. Eine solche Form wird z.B. durch bogenförmige Flügel gebildet, die sich von der Welle/Achse in radialer Richtung zur Behälterwand erstrecken. Die Welle/Achse kann durch ein Rohr und/oder einen Zapfen gebildet werden. Die Flügel erstrecken sich auf dem Bogen von der Mitte zum äußeren Rand, wobei die Vorderseite der Bögen die Förderrichtung und die Hinterseite die Drehrichtung ohne Förderwirkung definiert. Der Radius der Bögen ist mindestens gleich einem Viertel des Kreisel/Läufer/Rad-Durchmessers und vorzugsweise weniger als die Hälfte des Kreisel/Läufer/Rad-Durchmessers.
Die Vorderseiten der Bögen des unteren Pumpenorganes zeigen vorzugsweise im Verhältnis zu den Vorderseiten der Bögen des oberen Pumpenorganes in eine entgegengesetzte Drehrichtung.
Vorteilhafterweise werden die Flügel durch eine gemeinsame, ringförmige Scheibe stabilisiert. Die ringförmige Scheibe läßt mittig eine Öffnung, durch die die Suspension/Lösung angesaugt wird und an den Flügeln in der bevorzugten Ausführung eine Radialbewegung zur Behälteraußenwand erfährt.

An der Außenwand kann die anströmende Suspension/Lösung mit einem ringförmigen Kanal aufgefangen und einem Auslauf zugeleitet werden.
Günstig ist, wenn die ringförmige Scheibe an dem unten liegenden Pumpenorgan oben liegt und einen Kanal für die zu entleerenden Suspension/Lösung bildet. Diese Wirkung kann verstärkt werden, wenn die Behälterwandung über dem ringförmigen Kanal unter Einhaltung eines notwendigen Spieles möglichst dicht mit dem Pumpenorgan bzw. der Scheibe abschließt. Gleiches gilt für die ringförmige Scheibe an dem oben liegenden Pumpenorgan. Dort bewirkt die Kanalbildung eine Verbesserung der Umwälzleistung. Zur Bildung des Kanales für das obere Pumpenorgan trägt auch die ringförmige Scheibe für das untere Pumpenorgan bei, welche auf dem unteren Pumpenorgan oben angeordnet ist.
Bei gleichen Außendurchmessern der beiden Pumpenorgane wird die Umwälzströmung am äußeren Rand des oberen Pumpenorganes durch einen ausreichenden Spalt zur Behälterinnenwand hin eröffnet. Der Spalt besteht auch, wenn die oben erläuterte Abdichtung mit dem unteren Pumpenorgan durch einen umlaufenden und nach innen, gerichteten Steg der Behälterwandung gebildet wird.

Aufgrund der erfindungsgemäßen Kanalbildung ist es möglich, die beiden Pumpenorgane gleichzeitig zu drehen. Bei Betätigung des Pumpenorganes für die Suspensions/Lösungsumwälzung bzw. Mischung wird das Pumpenorgan für die Entleerung in der Richtung mitgedreht, in der es keine Förderwirkung entfaltet. Umgekehrt ist es, wenn das Pumpenorgan für die Entleerung betätigt wird und das Pumpenorgan für die Umwälzung bzw. Mischung mitgedreht wird.

Wahlweise sitzen die beiden Pumpenorgane drehbeweglich auf einem gemeinsamen Rohr. Dabei kann das eine Organ darüber hinaus eine Zapfen/Halterung bilden, auf dem das andere Organ sitzt.
Wahlweise besitzt das eine Pumpenorgan auch ein Rohr bzw. ist das eine Pumpenorgan auch mit einem Rohr verbunden, auf dem das andere Pumpenorgan sitzt.

Das Rohr kann als Luftzuführung genutzt werden. Zur Aktivierung der Enzyme und Bakterien sind bereits geringe Luftmengen ausreichend. Diese geringen Luftmengen werden wahlweise durch den sich mittig am Pumpenorgan für die Umwälzung bzw. Mischung bildenden. Unterdruck eingezogen. Die Luftmengen können zugleich durch kleine Durchtrittsquerschnitte begrenzt werden. Im Falle eines Aktivatorbehälters mit einem Durchmesser von 200 mm und gleicher Höhe für eine Mischung von 30 gr Enzymen und Bakterien in Wasser und einem Lufteinzug mittels entstehendem Unterdruck kann eine Durchtritts/Austrittsöffnung von 1 mm Durchmesser bereits ausreichen.

Vorteilhafterweise lassen sich einzelne und mehrere erfindungsgemäß verwendete Komponenten auch unabhängig von der in-Situ-Suspensions/Lösungserzeugung verwenden. Z.B. kann die erfindungsgemäße Dosierung auch genutzt werden, um das Trockenkonzentrat unmittelbar in einen Fettabscheider abzugeben.
Die erfindungsgemäße Suspensions/Lösungserzeugung kann auch genutzt werden, um aus der Entfernung Fettlösungsmittel in eine Abwasserleitung aufzugeben.
Desgleichen kann die erfindungsgemäße Suspensions/Lösungserzeugung vor oder hinter einem als Geruchsverschluß dienenden Syphon angeordnet werden.
Oder es kann die Mischeinrichtung genutzt werden, um mit einer Dosierwaage zusammenzuwirken.

Oder es kann die Suspensions/Lösungserzeugung genutzt werden, um Flüssigkonzentrat zu verdünnen und aufzugeben.
Oder es kann die Suspensions/Lösungserzeugung ganz oder teilweise in anderen Lebensbereichen genutzt werden, z.B. zur Herstellung von Getränken aus Trockenkonzentrat im Lebensmittelbereich oder in Chemiebereichen zur Mischung von Feststoffen in Flüssigkeiten bzw. zur Herstellung von Lösungen.

Soweit vorstehend Durchmesserangaben gemacht sind und in anderen Ausführungsbeispielen Behälter mit einer anderen Querschnittskonfiguration als kreisrund verwendet werden, wird anhand der Querschnittsfläche der anderen Konfiguration ein kreisrunder Querschnitt gleicher Fläche bestimmt und als Bezugsbasis für die Durchmesserangaben verwendet.

Weitere Merkmale der Erfindung sind in den Ansprüchen beschrieben.

In der Zeichnung ist ein Ausführungsbeispiel der Erfindung dargestellt:

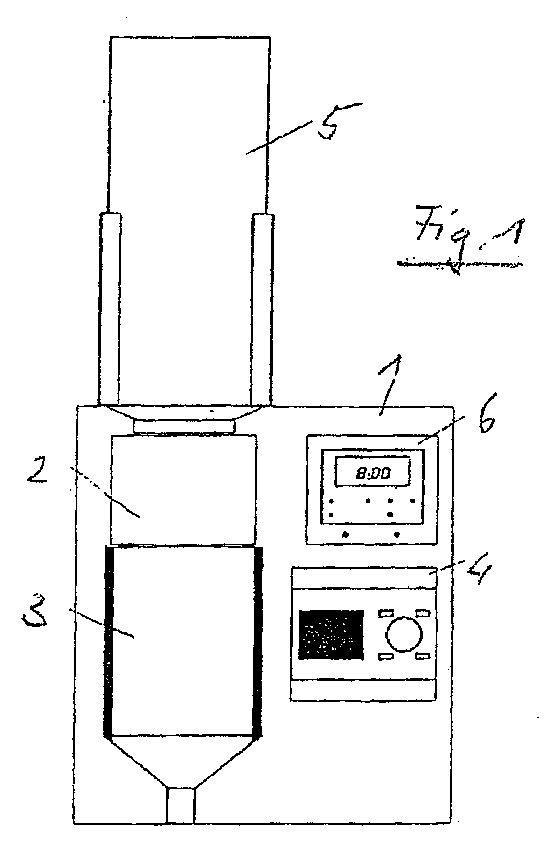

Fig. 1 zeigt eine schematische Gesamtansicht eines Gerätes zur Herstellung eines Fettlösungsmittels mit einem Trockenkonzentrat und zur Aufgabe des Fettlösungsmittels.
Das erfindungsgemäße Gerät wurde entwickelt, um mit Bakterien angereichertes Pulver zu dosieren, in Wasser zu lösen, dort zu aktivieren und die Lösung zu dosieren.

Es dosiert, durch eine Schaltuhr 6 gesteuert, mindestens einmal pro Tag eine abgemessene Menge Trockenkonzentrat als Pulver mit den notwendigen, zunächst noch inaktiven Substanzen in einen Aktivatorbehälter 3. Dort werden diese während einer Verweilzeit im Wasser gelöst, aktiviert und anschließend in die Abwasserleitung gespült.

Die Schaltuhr ist in einem weiteren Ausführungsbeispiel der Erfindung mit einer Datumsanzeige und frei einprogrammierbaren Ruhetagen versehen, so daß Wochenende und Feiertage oder auch Betriebsferien für eine Fleischerei oder Wurstfabrik von der Dosierung ausgenommen werden können, an denen nicht gearbeitet wird und deshalb auch kein Fett anfällt.
In einem Restaurant sind die Wochenenden und Feiertage dagegen regelmäßig Arbeitstage und liegen die Ruhetage in der Woche.

Die frei einprogrammierbaren Ruhetage setzen die Anlage außer Funktion. Das entlastet die Betreiber von den überflüssigen Kosten für nicht benötigtes Konzentrat und endastet die Umwelt von überdimensionierter Konzentratzuführung.
Die Programmierung erlaubt ein autonomes Wirken der Einrichtung ohne weitere Bedienung.

Das Gerät besteht aus einem Vorratsbehälter 5, der Dosiertrommel 2 zum Dosieren des Pulvers, dem Akdvatorbehälter 3 zum Mischen und Aufbereiten der Lösung und der Steuerung 4, die einen vollautomatischen Ablauf ermöglicht. Alle Teile sind auf eine Platte 1 montiert.
Der Vorratsbehälter 5 wird durch eine Flasche gebildet. Die Schaltuhr 6 gibt Kontakt zum Auslösen des Dosiervorganges. Die Steuerung 4 ist eine Mikrocontrollersteuerung, die den Ablauf des Dosiervorgangs steuert und überwacht.
In einem anderen Ausführungsbeispiel bilden die Schaltuhr und die Mikrocontrollersteuerung eine Einheit.

Ein Arbeitszyklus besteht im wesentlichen aus den folgenden Schritten, wobei vor Beginn des ersten Zyklus der Aktivatorbehälter gefüllt wird:
* Aktivatorbehälter 3 leeren
* Wasser eindosieren (in anderen Ausführungsbeispielen ist eine andere Abfolge mit dem Wasser vorgesehen)
* Pulver eindosieren
* Warten, bis das Pulver gelöst ist bzw. bis eine ausreichendes Wachstum entstanden ist
* Aktivatorbehälter 3 leeren and spülen
* Aktivatorbehälter 3 füllen

Der Zyklus wird einmal pro Tag durchlaufen. Der Beginn wird über die Zeitschaltuhr 6 eingestellt.

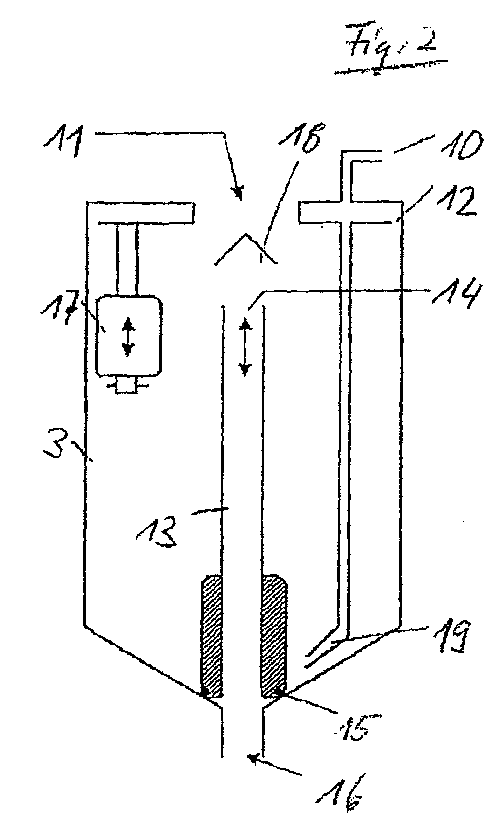

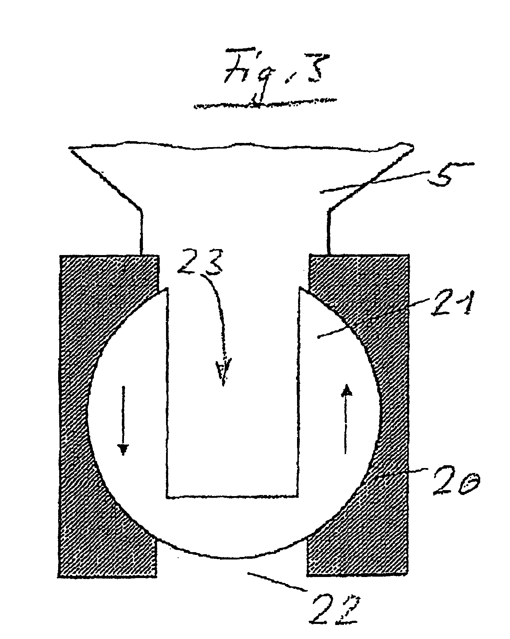

Die Fig. 3 zeigt die Dosiertrommel 2 in einer Systemdarstellung. Im einzelnen ist ein Trommelquerschnitt 21 mit einer Tasche 23 ersichtlich. Die Trommel ist in einem Gehäuse 20 gelagert, das oben und unten mit einem Schacht 22 versehen ist. Der Schacht oben definiert die Auslauföffnung des Vorratsbehälters und dient dazu, das aus dem Vorratsbehälter 5 austretende Pulver aufzunehmen. Das Pulver dringt in die Tasche 23, deren Volumen dem zu dosierenden Volumen des Pulvers entspricht. In der gezeigten Stellung mit der Öffnung nach oben nimmt die Trommel die gewünschte Pulvermenge auf. Sie gibt sie nach einer 18O-Grad-Drehung nach unten in den Schacht 22 ab. Der Schacht unten definiert die Einlauföffnung des Behältes 3. Für eine Dosierung macht die Trommel eine volle Umdrehung, wie durch zwei Pfeile angedeutet.

In einer bevorzugten Betriebsweise bleibt die Dosiertrommel nach der Entleerung sofort in der Entleerungsstellung, bis ein neuer Dosiervorgang ansteht. Dadurch wird der Aktivatorbehälter verschlossen und kann keine Feuchtigkeit aus dem Aktivatorbebälter in den Vorratsbehälter dringen und das Trockenkonzentrat dort zu früh aktivieren.

Es ist auch möglich, die Dosiertrommel nach der Entleerung wieder in die Füllstellung zurückzudrehen. Dann wird wird feuchte Luft aus dem Aktivatorbehälter mitgenommen, die in die Tasche 23 dringt. Je nach Trockenkonzentrat und Betriebsweise verursacht die feuchte Luft jedoch keinen nennenswerten Schaden durch zu frühes Aktivieren.

In weiteren möglichen Betriebsweisen wird die Trommel zwischen der Entleerung und Wiederbefüllung so gedreht, daß die Tasche quer zur Vertikalen verläuft. In dieser Stellung ist die Tasche 23 mit der eingeschlossenen Luft verschlossen. Die Trommel wird erst zur Befüllung wieder in die Vertikale gedreht.
Die Vertikale verläuft im Ausführungsbeispiel durch die Mitte der Vorratsbehälterauslauföffnung und durch die Mitte der Aktivatorbehältereinlauföffnung.

Die Trommel eröffnet auch noch andere Betriebsweisen, nämlich die Möglichkeit, die Tasche durch Trommeldrehung in der Füllstellung geneigt anzuordnen, so daß das Trockenkonzentrat auf einer Einlaufschräge in die Tasche rutscht. Eine entsprechende Stellung ist auch bei der Entleerung möglich, so daß das Konzentrat bei der Entleerung auf einer Auslaufschräge in den Mischsbehälter 3 rutscht.
Die Einlaufschräge und/oder Auslaufschräge kann zeitweise durch Trommelarretierung unverändert bleiben oder durch fortlaufende Trommeldrehung verändert werden. Die Veränderung wird dabei durch Änderung der Trommelgeschwindigkeit nach Belieben gesteuert.

Die Fig. 2 zeigt den Aktivatorbehälter 3 mit seinen Einzelkomponenten. Er ist als Zylinder mit trichterförmigem Boden ausgefühtt und hat oben eine Öffnung 11, durch die das Pulver aus der Dosiertrommel 2 eingeführt wird. Der Wasserzulauf 1O mündet an der Behälteroberkante in eine Ringleitung. Dort tritt das Wasser aus mehreren Düsen 12 aus. Die Düsen 12 sind am Behälterumfang schräg angeordnet und sollen die Behälterwand benetzen und reinigen.
Ferner ist am Behälterauslauf 16 eine Düse 19 vorgesehen, die gleichfalls aus der erwähnten Ringleitung gespeist wird. Die Düse 19 ist auf den Auslauf 16 gerichtet, so daß der Auslauf bespritzt und Pulver beim Mischen aufwirbelt. Durch die besondere Anordnung der Düsen 12 und 19 wird die Fllüssigkeit im Aktivatorbehälter 3 in eine starke Kreisbewegung versetzt, die einen guten Mischvorgang gewährleistet und den Aktivatorbehälter 3 anschließend zuverlässig sauberspült.

In weiteren, nicht dargestellten Ausführungsbeispielen ist eine Düse durch den Behälterdeckel und/oder durch die Behälterwand in den Aktivatorbehälter geführt und dort tangential und/oder horizontal und/oder schräg nach unten angestellt. Diese Anstellung setzt die Suspension oder Lösung mit hohem Wirkungsgrad in Drehung bzw. bewirkt mit entsprechendem Wirkungsgrad eine Vermischung und eine anschließende Reinigung.

Der Behälterauslauf 16 ist mittig am trichterförmigen Behälterboden angeordnet und mit einem Hohlstopfcn 13 versehen. Unten besitzt der Hohlstopfen 13 eine Dichtung 15 und einen ringförmigen Verschluß. Dieser öffnet und schließt durch Heben und Senken des Stopfens 13 den Auslauf 16. Der Hohlstopfen 13 bildet zugleich einen Überlauf, indem er mit einer rohrförmigen Verlängerung bis in die Höhe des maximalen Füllstandes ragt. Darüber hinaus zufließendes Wasser läuft durch den Hohlstopfen 13 ab.

In einem anderen Ausführungsbeispiel ist der Behälterauslauf des Aktivatorbehälters außermittig angeordnet, um zu verhindern, daß von oben herunterfallendes Konzentrat bzw. durch die Suspension oder Lösung absinkendes Konzentrat sich sofort auf dem Auslauf ablagert.

Über dem Hohlstopfen 13 ist eine kegelförmige Abdeckung 18 vorgesehen, die einen Verlust von Pulver in den Auslauf verhindert.

Desweiteren läßt sich eine Staubbildung durch vorheriges Benetzen der Behälterflächen mit Wasser und/oder durch intensives Wasserbedüsen bei der Entleerung und/oder durch kurze Entleerungsintervalle mit anschließender Mischung verhindern.

Bei Erreichen des maximalen Füllstandes wird ein Schwimmschalter 17 betätigt. Der Schwimmschalter 17 unterbricht den Wasserzulauf.

Die Einzelfunktionen stellen sich wie folgt dar:

Vor dem ersten Arbeitszyklus wird die Versorgungsspannung eingeschaltet, anschließend der Michbehälter 3 mit Frischwasser gefüllt und die Zeit bis zum Erreichen des maximalen Füllstandes (Betätigen des Schwimmschalters 17) gemessen. Die gemessene Zeit wird in der unten beschriebenen Weise verwertet.

Beim Dosieren des Pulvers wird mit Hilfe der Dosiertrommel 2 eine bestimmte, vorkalkulierte Pulvermenge in den Aktivatorbehälter 3 gefüllt. Dabei bildet die Dosiertrommel 2 zugleich einen Verschluß, die verhindert, daß Feuchtigkeit in den Vorratsbehälter 5 dringt. Die Dosiertrommel 2 läuft in einem Gehäuse, dessen Wände dichtend an der Trommel anliegen.
Der Vorratsbehälter 5 kann im Ausführungsbeispiel einen Pulvervorrat für 30 Tage aufnehmen.

Nach dem Dosieren des Pulvers in den leeren Aktivatorbehälter 3 wird Wasser zugeführt. Mit Hilfe der Düse 19 im unteren Bereich des Aktivatorbehälters 3 wird das Pulver im Wasser aufgewirbelt. Es wird so viel Wasser zugeführt, daß der Wasserspiegel unterhalb des maximal zulässigen Niveaus liegt. Auf diese Weise ist es möglich, vor dem Öffnen des Behälterauslasses 16 noch einmal Wasser zuzuführen, ohne den Aktivatorbehälter 3 zu überfüllen. Dann wird mehrere Stunden gewartet, bis dss Pulver gelöst ist und die Bakterien in Lösung aktiviert sind.

In einem weiteren Ausführungsbeispiel wird die Lösung/Suspension in einem Kreislauf ständig bewegt. Durch die ständige Bewegung werden Ablagerungen verhindert und wird in bestimmten Bewegungsgrenzen das Wachstum beschleunigt.

Während des Aktivierens kann sich um den Behälterauslaß 16 herum eine Ablagerung bilden. Nach Ablauf der Wartezeit wird erneut Wasser zugeführt, um die Ablagerung aufzuwirbeln. Unmittelbar danach wird der Aktivatorbehälter 3 unter ständigem Spülen geleert. Um sicherzustellen, daß sich auch hartnäckige Ablagerung aus dem Aktivatorbehälter löst, wird anschließend in Intervallen nachgespült.

Nach dem Leerspülen des Aktivatorbehälters 3 wird er für die Ruhezeit bis zur nächsten Dosierung mit Wasser gefüllt. So kann sich aus geringen Pulverrückständen keine Kruste bilden, die dann zu Fehlfunktionen führen könnte. Ein zweiter Grund für das Füllen ist die Messung der Füllzeit bis zum Erreichen des maximalen Füllstandes. Mit der gemessenen Füllzeit ist es möglich, eine Abschaltung des Wasserzulaufes über eine Zeitbegrenzung zu realisieren.

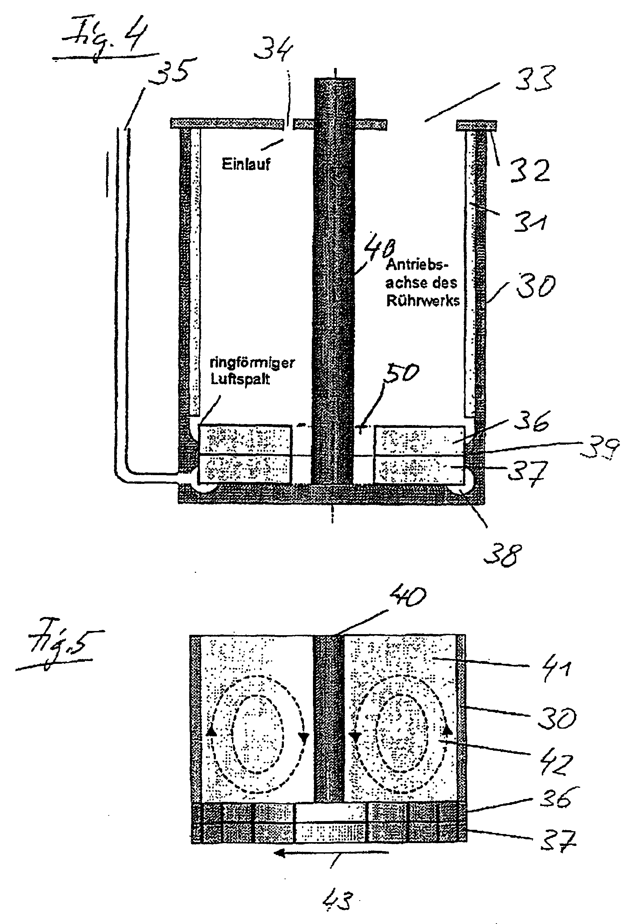

Fig. 4 bis 8 zeigen einen weiteren erfindunsgemäße Aktivatorbehälter.

In den Aktivatorbehälter 30 wird durch eine Öffnung 33 wie in den Ausführungsbeispielen nach Fig. 1 bis 3 pulverförmges Trockenkonzentrat eingestreut. Das Wasser tritt gleichzeitig durch eine Öffnung 34 ein. Im übrigen ist der Aktivatorbehälter 30 mit einem Deckel 32 verschlossen und gehört zu dem Aktivatorbehälter ein Behälterboden.

In dem Aktivatorbehälter 30 soll sich die Trockensubstanz im Wasser lösen. Die Lösung soll über längere Zeit turbulent bewegt werden, während geringe Mengen an Luft zugeführt werden.

Der Aktivatorbehälter 30 ist zylinderförmig gebaut. Der Innendurchmesser beträgt 200 mm. Im Aktivatorbehälter 30 befindet sich ein Rührwerk, das zwei Funktionen hat
a) während des Mischens versetzt das Rührwerk die Suspension in eine ständige Bewegung, so daß das Pulver vollständig gelöst wird und sich nicht am Boden des Aktivatorbehälters absetzen kann. An der Innenseite des Aktivatorbehälters 30 sind vertikale Rippen 31 angebracht. Sie beeinflussen die Bewegung in der Weise, daß die Strömung der Suspension auf einer radial-vertikalen Ebene turbulent verläuft. Dadurch wird das Pulver während des gesamten Mischvorganges aufgewirbelt.
b) nach dem Mischen arbeitet das Rührwerk als Kreiselpumpe, die die Lösung aus dem Aktivatorbehälter 30 pumpt.

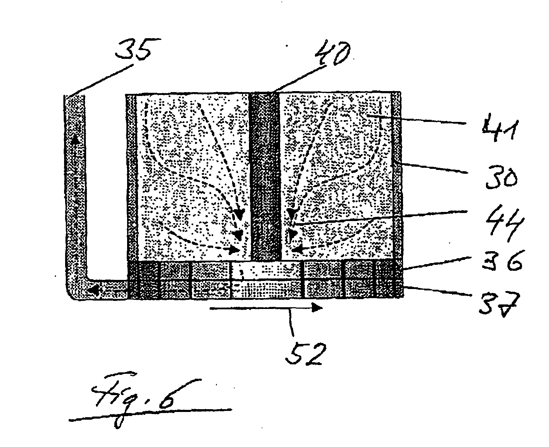

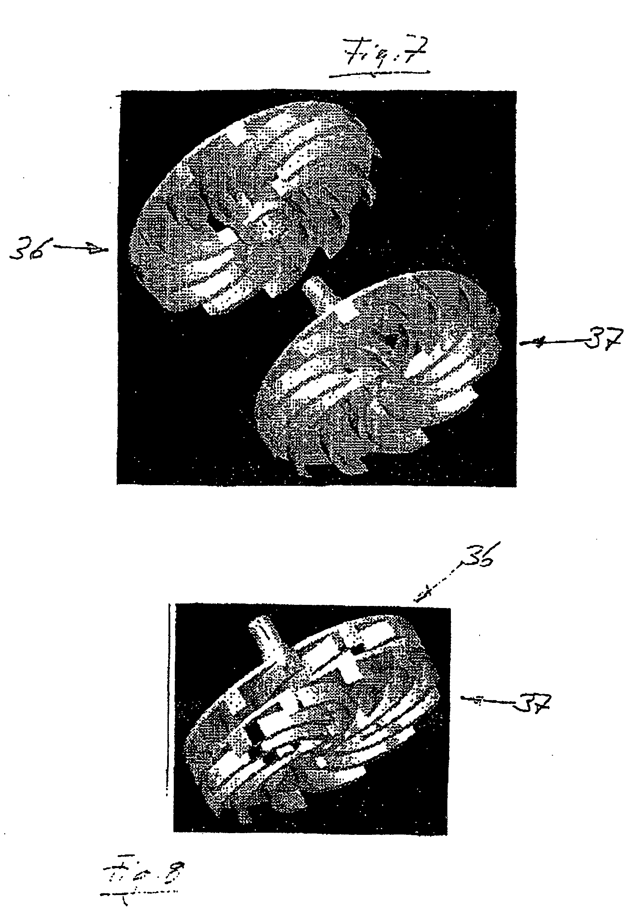

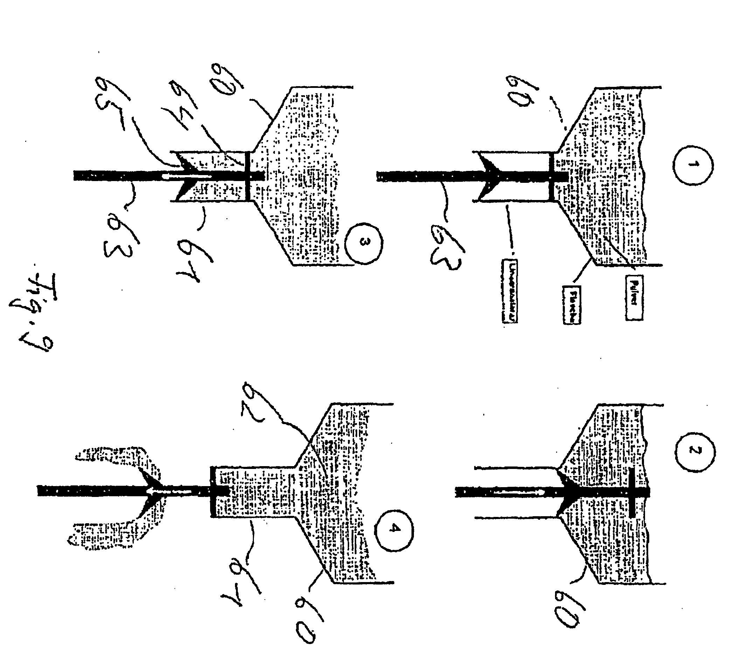

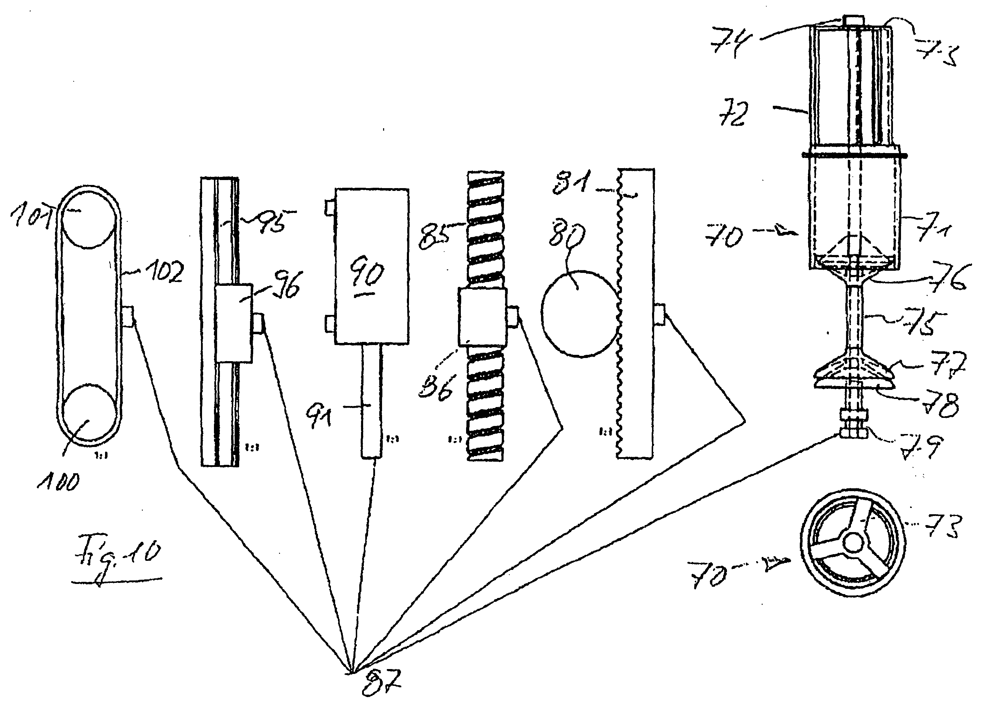

Zu dem Rührwerk gehören zwei Flügelräder 36 und 37 aus Kunststoff. Es handelt sich um Spritzgußteile. Die Flügelräder 36 und 37 sind am Boden des Aktivatorbehälters 30 liegend und übereinander angeordnet. Die Flügelräder 36 und 37 sind in Fig. 7 einzeln in einer Detailansicht und in Fig. 8 in einer Detailansicht dargestellt.
Dabei ist ersichtlich, daß zu dem Flügelrad 36 ein mittig angeordnetes Rohrstück gehört, von dem die Flügel ausgehen. Die Flügel verlaufen bogenförmig. Ihr Radius ist größer als 1/4 des Flügelraddurchmessers und kleiner als der halbe Flügelradduchdurchmesser, im Ausführungsbeispiel 3/8 des Flügelraddurchmessers. Dieser Flügelverlauf stellt sicher, daß die sich zwischen den Flügeln befindende Suspension während einer Flügelraddrehung entgegen dem Uhrzeigersinn (in der Ansicht nach Fig. 7 von unten) radial nach außen gedrückt wird. In der entgegengesetzten Drehrichtung wird die Suspension an eine Bewegung in radialer Richtung nach außen gehindert.
Im Ausführungsbeispiel entsteht die Förderwirkung des Flügelrades 36 bei einer Drehung entgegengesetzt zum Uhrzeigersinn, weil die Flügel mit der Vorderseite ihrer Bögen in diese Richtung weisen.
Oben ist an dem Flügelrad 36 eine ringförmige Scheibe angeformt. Die Scheibe hat verschiedene Aufgaben. Sie trägt zur Stabilität bei und bildet einen Kanal, der die Mischfunktion begünstigt.
Innen läßt die ringförmige Scheibe eine Durchtritts/Eintrittsöffnung 50 für die Suspension frei, die in Fig. 4 schematisch und ohne die Flügel des Flügelrades dargestellt ist.

Zu dem Flügelrad 37 gehört ein mittiges Rohr 40, von dem aus sich die Flügel bogenförmig zur Behälterinnenwand hin erstrecken. Die Ausbildung und der Verlauf dieser Flügel entspricht dem Flügelrad 36 mit einem Unterschied: die Bögen weisen in eine entgegengesetzte Drehrichtung, so daß eine Förderwirkung bei einer Drehung des Flügelrades 37 im Uhrzeigersinn entsteht. Bei einer Drehung entgegen dem Uhrzeigersinn wind die zwischen die Flügel eingedrungene Suspension radial zur Behältermitte hin gefördert.

Das Flügelrad 37 ist in gleicher Weise wie das Flügelrad 36 oben mit einer ringförmigen Scheibe versehen.

In dem in Fig. 8 dargestellten Zusammenbau sitzt das Flügelrad 36 in Drehrichtung fest auf dem Rohr 40 des Flügelrades 37, so daß bei einer Drehung des Rohres 40 beide Flügelräder bewegt werden.

Zwischen den beiden ringförmigen Scheiben beider Flügelräder 36 besteht ein Kanal, desgleichen zwischen dem Behälterboden und der ringförmigen Scheibe des unteren Flügelrades 37.

Der Aktivatorbehälter 30 umschließt die beiden Flügelräder 36 und 37 unter Freilassung eines für die Drehung erforderlichen Spieles mit einem Steg 39. Die Stegbreite ist allerdings so gewählt, daß der Suspensionsaustritt aus dem Kanal zwischen den beiden ringförmigen Behälterwandungen und die dort vorgesehenen Rippen 31 mit einer Rippenhöhe (in radialer Richtung) von 20 nun gezwungen wird vertikal nach oben zu strömen. Zugleich wird die Suspension durch die Eintrittsöffnung 50 hindurch eingezogen, wenn das Flügelrad 36 entgegengesetzt zum Uhrzeigersinn gedreht wird.

Die Drehrichtung ist in Fig. 5 schematisch dargestellt und mit 43 bezeichnet, die entstehende Vertikalströmung mit 42. Die Strömung 42 ist eine zirkulare turbulente Strömung. Die vertikalen Rippen31 an der Behälterinnenwand verhindern eine tangentiale Strömung. In dem Sinne arbeitet das Flügelrad 36 als Rührwerk.
Das Rührwerk wird solange in Tätigkeit gehalten, bis die gewünschte Aktivierung der Enzyme und Bakterien erreicht ist. Im Ausführungsbeispiel ist eine Zeitdauer von 2 h vorgesehen.
Während dieser Tätigkeit bleibt das Flügelrad 37 ohne Förderwirkung/Funktion.

Zur Aktivierung der Enzyme und Bakterien im Wasser werden geringe Mengen Luft benötigt. Dieser wird durch einen dünnen Kanal in dem Rohr 40 und durch eine nicht dargestellte Bohrung in die Suspension geleitet. Die Bohrung befindet sich im Bereich des Flügelrades 36. Dort entsteht ein Unterdruck, der die Luft in die Suspension zieht.
In einem anderen, nicht dargestellten Ausführungsbeispiel wird die Luft mittels einer integrierten Pumpe zudosiert.

Nach der Aktivierung wird die Drehrichtung des Rührwerkes umgedreht. Das Flügelrad 36 verliert dadurch seine Umwälzwirkung, während das Flügelrad 37 als Kreiselpumpe in Funktion tritt. In Fig. 6 ist die neue Drehrichtung mit 52 bezeichnet.
Die Suspension wird von dem Flügelrad 36 durch die Eintrittsöffnung 50 angesaugt. Die dadurch entstehende Strömung ist in Fig. 6 mit 44, die Suspension mit 41 bezeichnet.

Die angesaugte Suspension wird von dem Flügelrad 37 in einen umlaufenden Kanal 38 und von dort in einen Ablauf 35 gedrückt. Der Ablauf 35 führt in eine fettbelastete Abwasserleitung.

Die Fig. 9 zeigt einen Linearfeeder in vier verschiedenen Betriebsstellungen, die Fig. 10 verschiedene Antriebe für den Linearfeeder.

Der vorratsbehälter ist im Ausführungsbeispiel eine Flasche 60 mit einem Hals 61, in dem sich eine zylindrische Öffnung befindet. In anderen Ausführungsbeispielen ist ein Behälter aus Weichplastik vorgesehen, der auf ein Zylinderstück gesteckt oder gedreht wird.
In der Öffnung ist eine Kolbenstange 63 mit zwei Kolben 64 und 65 verschiebbar angeordnet. Die Kolbenstange 63 bildet mit den Kolben 64 und 65 ein Kunststoffspritzteil. Das Kunststoffspritzteil erlaubt auch das Anformen von nicht dargestellten Dichtlippen an dem Kolben 64.
Der Kolben 65 hat die Form eines Hohlkegels, wobei die äußeren Enden eine membranartige Dichtlippe bilden.
Bild 1 der Fig. 9 zeigt die Ausgangsstellung des Linearfeeders. Dabei wind der Flaschenhals 61 durch beide Kolben 64 und 65 verschlossen. Es befindet sich kein Trockenkonzentrat in dem Flaschenhals 61.
Bild 2 zeigt den Kolbenhub zur Füllung des Zwischenraumes zwischen beiden Kolben 64 und 65. Dabei werden die Kolben nach oben gestoßen.
Anschließend werden die Kolben nach unten gezogen. Auf dem Weg durchlaufen die Kolben eine dem Bild 1 gleiche Stellung gemäß Bild 3, aber mit dem Unterschied, daß der Zwischenraum zwischen beiden Kolben 64 und 65 im Flaschenhals 61 mit Trockenkonzentrat gefüllt ist.
Die Endstellung der Kolben ist in Bild 4 der Fig. 9 dargestellt. Der untere Kolben 65 ist aus dem Flaschenhals herausgezogen worden, jedoch nur soweit, daß der obere Kolben noch in dichtendem Eingriff mit dem Flaschenhals 61 steht und sich ein Spalt gebildet hat, durch den das Trockenkonzentrat auslaufen kann. Das wird durch die Ablaufschräge des unteren Kolbens 65 sehr begünstigt.
Aus der Entleerungsstellung von Bild 4 werden die Kolben 64 und 65 wieder zurück in die Ausgangsstellung des Bildes 1 geschoben. Dabei schiebt der obere Kolben 64 den Flaschenhals wieder frei und das eingedrungene Trockenkonzentrat aus dem Flaschenhals in den Vorratsbehälter zurück.

Fig. 10 zeigt einen ganz als Kunststoffteil gefertigen Linearfeeder 70.
Die Kolbenstange ist mit 75 bezeichnet, der Zylinder mit 71.
Im Unterschied zu dem Linearfeeder der Fig. 9 ist noch ein Führungsteil mit Stegen 72 und 73 und einer Führungsbuchse 74 vorgesehen. Die drei Stege 72 verlaufen parallel zur Zylinderachse. Die drei Stege 73 verlaufen raidal und verbinden die Stege 72 mit der Buchse 74.
Die Kolbenstange 75 ist so lang ausgebildet, daß sie in der untersten Stellung (Entleerungsstellung) immer noch in der Buchse 74 geführt ist. Mit Hilfe des Fuhrungsteils wird die Kolbenstange immer an zwei Stellen geführt und ein Verkanten ausgeschlossen.
Die Stege 72 und 73 haben ausreichenden Abstand, um ein sichercs Einlaufen des Trockenkonzentrates und ein sicheres Zurückschieben des Trockenkonzentrates zu gewährleisten.
Darüber hinaus verhindert das Führungsteil einen übermäßigen Fülldruck.

Auch die Kolben unterscheiden sich in Fig. 10 von dem Ausführungsbeispiel nach Fig. 9. Der untere Kolben besitzt zwei kegelförmige Membranen 77 und 78. Dadurch entsteht eine Mehrfachabdichtung und wird die Abdichtung verbessert.
Der obere Kolben ist gleichfalls wie eine kegelförmige Membran 76 ausgebildet, aber zu den Membranen 77 und 78 um 180 Grad versetzt auf der Kolbenstange 75 angeordnet. Der Konzentratdruck verstärkt dadurch die Abdichtung.

Am Ende 79 findet sich der Anschluß für den Kolbenantrieb.
Die Fig. 10 zeigt fünf verschiedene Antriebsvarianten, nämlich einen Zahnstangenantrieb, einen Spindelantrieb, einen Hubzylinderantrieb, einen Linearmotorantrieb und einen Riemenantrieb.

Zu dem Zahnstangenantrieb gehören eine in einer Geradführung verschiebbar angeordnete Zahnstange und ein Antriebsritzel. Die Kolbenstange ist bei 87 mit der Zahnstange gekoppelt. In einem anderen Ausführungsbeispiel ist die Zahnstange ein Teil der Kolbenstange.
Durch Ritzeldrehung wird die Zahnstange in Längsrichtung hin- und hergehend bewegt. Besonders vorteilhaft ist dabei eine Schrittmotor, wie er zur Dosiertrommel beschrieben worden ist.

Zu dem Spindelantrieb gehört eine in zwei Lagern drehbeweglich aber in axialer Richtung fest angeordnete Spindel 85. Für die Spindel 85 ist im Ausführungsbeispiel der gleiche Motor wie für den Zahnstangenantrieb vorgesehen.
Auf der Spindel 85 gleitet eine Schloßmutter 86. Die Schloßmutter 86 ist so geführt, daß sie zwar keine Drehbewegung ausführen kann, aber aufgrund der Spindeidrehung eine Bewegung in Spindellängsrichtung erfährt.
Der besondere Vorteil des Spindelantriebes ist eine hohe Untersetzung der Motorantriebsbewegung.
Die Verbindungsstelle der Kolbenstange 75 mit der Schloßmutter ist wie bei dem Zahnstangenantrieb mit 87 bezeichnet..

Zu dem Hubzylinderantrieb gehören ein Zylinder 90 und eine Kolbenstange 91.
Der Hubzylinder kann elektrisch, pneumatisch oder hydraulisch betätigt werden.
Die Verbindungsstelle der Kolbenstange 75 mit der Kolbenstange 91 ist wie bei dem Zahnstangenantrieb mit 87 bezeichnet.

Zu dem Linearmotorantrieb gehören eine Geradführung 95 und ein in/auf der Führung 95 verfahrbarer und angetriebener Schlitten/Wagen 96. Die Verbindungsstelle der Kolbenstange 75 mit dem Schlitten/Wagen 96 ist wie bei dem Zahnstangenantrieb mit 87 bezeichnet.

Zu dem Riemenantrieb gehören Riemenscheiben 100 und 101 und ein Riemen 102. Eine der Riemenscheiben ist angetrieben. Im Ausführungsbeispiel wird ein Zahnriemen verwendet, in anderen Ausführungsbeispielen eine Keilriemen.
Die Verbindungsselle der Kolbenstange 75 mit dem Riemen ist wie bei dem Zahnstangenantrieb mit 87 bezeichnet.

Alle Teile bestehen in den Ausführungsbeispielen aus Kunststoff oder Edelstahl. Dabei wird ein enzym- und bakterienresistenter Kunststoff verwendet. Der Kunststoff ist POM.

## Patentansprüche

1. Verfahren zur Reinigung von Fett mittels Fettlösungsmittel mit Enzymen und Bakterien in wäßriger Form als Fettlösungsmittel und für die Reinigung von Abwasserleitungen und/oder Fettabscheidern, **dadurch gekennzeichnet, daß** das Fettlösungsmittel in situ durch Zusammenführung von Trockenkonzentrat und Wasser hergestellt wird, wobei das Wasser und das Trockenkonzentrat zunächst in einen Aktivatorbehälter (3) aufgegeben und dort aktiviert werden und anschließend in die Abwasserleitung und/oder den Fettabscheider geleitet werden.

2. Verfahren nach Anspruch 1, **dadurch gekennzeichnet, daß** das Trockenkonzentrat umgewälzt und die Wachstumstemperatur für die Enzyme und/oder Bakterien eingehalten wird und/oder Luft in die Flüssigkeit eingeleitet wird.

3. Verfahren nach Anspruch 1 oder 2, **gekennzeichnet durch** die Verwendung von pulverförmigem Konzentrat und/oder von Konzentratpellets und/oder Konzentratkörnern.

4. Verfahren nach Anspruch 3, nach einem der Ansprüche 1 bis 4, **dadurch gekennzeichnet, daß** das Konzentrat durch Gefriertrockung und anschließende Mahlung und/oder durch Pelletisierung vor und/oder nach der Gefriertrocknung hergestellt wird.

5. Verfahren nach Anspruch 4, **gekennzeichnet durch** die Pelettisierung des Ausgangsmaterials zwischen Walzen oder **durch** Pressen des Ausgangsmaterials **durch** Düsen zu Strängen und anschließendes Granulieren der Stränge.

6. Verfahren nach Anspruch 4 oder 5, **gekennzeichnet durch** eine Klassierung des Mahlgutes und/oder Granulates und/oder Abtrennung von Unterkorn und/oder Überkorn.

7. Verfahren nach einem der Ansprüche 1 bis 6, **dadurch gekennzeichnet, daß** zunächst das Trockenkonzentrat und anschließend das Wasser in den Aktivatorbehälter gegeben wird und/oder die entstehende Suspension oder Lösung spätestens am Fettabscheider oder an vergleichbarer Stelle in die Abwasserleitung gegeben wird.

8. Verfahren nach einem der Ansprüche 1 bis 7, **gekennzeichnet durch** eine Reinigung des Aktivatorbehälters mit Wasser nach der Entleerung der Suspension in eine Abwasserleitung oder in einen Fettabscheider.

9. Verfahren nach einem der Ansprüche 1 bis 8, **gekennzeichnet durch** Herstellung des Trockenkonzentrats im Wege der Gefriertrocknung.

10. Verfahren nach einem der Ansprüche 1 bis 9, **dadurch gekennzeichnet, daß** die Wirksamkeit der Suspension oder Lösung durch einen Trockenkonzentratanteile von 4 bis 100 Gramm pro Liter eingestellt wird.

11. Verfahren nach einem der Ansprüche 1 bis 10, **dadurch gekennzeichnet, daß** die Verweilzeit des Trockenkonzentrats im Aktivstorbehälter (3) mindestens 0,5 Stunden beträgt.

12. Verfahren nach einem der Ansprüche 1 bis 11, **dadurch gekennzeichnet, daß** Füllzeiten des Aktivatorbehälters gemessen werden und/oder die Aktivierungszeit gemessen wird.

13. Verfahren nach einem der Ansprüche 1 bis 12, **dadurch gekennzeichnet, daß** Entmischungen/Ablagerungen mit einer Badbewegung im Aktivatorbehälter und/oder mit einer Behälterspülung nach der Behälterentleerung beseitigt werden.

14. Verfahren nach einem der Ansprüche 1 bis 13, **dadurch gekennzeichnet, daß** die Suspension oder Lösung intermittierend oder kontinuierlich in die Abwasserleitung oder in den Fettabscheider aufgegeben wird.

15. Verfahren nach Anspruch 14, **dadurch gekennzeichnet, daß** die Aufgabe der Suspension oder Lösung unabhängig vom Fettanfall und/oder in Abhängigkeit vom Fettanfall erfolgt.

16. Verfahren nach Anspruch 14, **dadurch gekennzeichnet, daß** die Anpassung an den Fettanfall durch Messung der Abwasserströmung oder durchflußmengenunabhängig zeitabhängig erfolgt.

17. Verfahren nach Anspruch 16, **dadurch gekennzeichnet, daß** der gemessene Fettanfall in einen Rechner gegeben wird, der mit dem Meßwert die Aufgabe der Suspension bzw. Lösung steuert oder daß eine erfahrungsgemäß oder versuchsmäßig festgelegte Menge an Suspension oder Lösung aufgegeben wird und/oder die festgelegte Menge portionsweise in die Abwasserleitung aufgegeben wird.

18. Verfahren nach einem der Ansprüche 1 bis 17, **dadurch gekennzeichnet, daß** mindestens täglich Suspension oder Lösung in die Abwasserleitung aufgegeben wird und/oder an Wochenenden und Feiertagen und in Betriebsferien keine Aufgabe erfolgt

19. Verfahren nach Anspruch 18, **gekennzeichnet durch** die Verwendung einer EDV-Steuerung mit frei programmierbaren Ruhetagen.

20. Verfahren nach Anspruch 19, **dadurch gekennzeichnet, daß** die Suspension oder Lösung während der Betriebsruhe zwischen zwei aufeinanderfolgenden Arbeitstagen aufgegeben wird.

21. Verfahren nach einem der Ansprüche 18 bis 20, **gekennzeichnet durch** die Verwendung einer Zeitschaltuhr und/oder einer Steuerung (4) zur Betätigung der Vorrichtungsteile.

22. Verfahren nach Anspruch 21, **gekennzeichnet durch** eine Zeitschaltuhr mit mehreren Schaltintervallen für eine oder mehrere Funktionen der Suspensions/Lösungsherstellung oder Herstellung der Lösung.

23. Verfahren nach einem der Ansprüche 1 bis 22, **gekennzeichnet durch** die Verwendung eines Vorratsbehälters (5), einer unter dem Vorratsbehälter (5) angeordneten linear oder zirkular arbeitenden Dosierung für die Dosierung des Trockenkonzentrats in einen darunter angeordneten Aktivatorbehälter (3), wobei die Dosierung die für die Dosierung vorgesehene Menge an Trockenkonzentrat mit einem oder mehreren Schritten in den Aktivatorbehälter (3) für die Vermischung mit Wasser bzw. Lösung in Wasser aufgibt.

24. Verfahren nach Anspruch 23, **gekennzeichnet durch** die Verwendung einer Dosiertrommel (2) oder eines Zellenrades oder eine Dosierwaage oder eines Linearfeeders.

25. Verfahren nach Anspruch 24, **gekennzeichnet durch** die Verwendung einer Trommel mit mindestens einer Ausnehmung oder Tasche (23) am umfang.

26. Verfahren nach Anspruch 24 oder 25, **dadurch gekennzeichnet, daß** die Trommel bzw. der Linearfeeder nach der Entleerung in den Aktivatorbehälter bis zum nächsten Dosiervorgang in der Entleerungsstellung verbleibt.

27. Verfahren nach einem der Ansprüche 24 bis 26, **dadurch gekennzeichnet, daß** die Trommel unmittelbar nach der Entleerung in den Aktivatorbehälter gedreht bzw. der Linearfeeder bewegt wird, bis die Ausnehmung der Trommel gegenüber dem Aktivatorbehälter verschlossen ist bzw. die Füllöffnung des Linearfeeders verschlossen ist.

28. Verfahren nach Anspruch 27, **dadurch gekennzeichnet, daß** die Trommel bzw. der Linearfeeder unmittelbar nach der Entleerung wieder in die Füllstellung gebracht wird, wenn das für das Trockenkonzentrat unschädlich ist.

29. Verfahren nach einem der Ansprüche 24 bis 28, **dadurch gekennzeichnet, daß** die Trommel zur Entleerung gedreht wird, bis die Ausnehmung der Trommel in der Entleerungsstellung eine schräge Ablauffläche bildet.

30. Verfahren nach einem der Ansprüche 24 bis 29, **dadurch gekennzeichnet, daß** die Trommel nach der Entleerung zum Verschluß der Öffnung gedreht wird, bis die Ausnehmung quer zu einer Linie steht, die durch die Mitte der Auslaßöffnung des Vorratsbebälters und durch die Mitte der Einlaßöffnung des Aktivatorbehälters geht.

31. Verfahren nach einem der Ansprüche 24 bis 30, **dadurch gekennzeichnet, daß** die Trommel zur Füllung gedreht wird, bis die Ausnehmung der Füllstellung eine schräge Einlauffläche bildet.

32. Verfahren nach einem der Ansprüche 29 bis 31, **dadurch gekennzeichnet, daß** die schräge Einlauffläche oder Auslauffläche zeitweise durch Trommelarretierung unverändert bleibt oder durch Änderung der Trommelgeschwindigkeit gesteuert wird.

33. Verfahren nach einem der Ansprüche 26 bis 32, **gekennzeichnet durch** die Verwendung einer Dosiertrommel (2) oder Zellenrades, dessen Ausnehmung/Tasche (23) ein Aufnahmevolumen besitzt, das kleiner als die für einen Herstellungsvorgang vorgesehene Menge an Trockenkonzentrat ist.

34. Verfahren nach einem der Ansprüche 26 bis 33, **dadurch, gekennzeichnet** durch die Verwendung gleicher Dosiertrommeln oder Zellenrädern für unterschiedliche Mengen an Trockenkonzentrat und durch Änderung Dosierbewegungen zur Anpassung an die Mengenänderung.

35. Verfahren nach einem der Ansprüche 26 bis 34, **gekennzeichnet durch** die Verwendung eines Schrittmotors für den Antrieb der Dosiertrommeln odcr Zellenrädern.

36. Verfahren nach Anspruch 29, **gekennzeichnet durch** die Verwendung einer Schaltung, ausgewählt aus Endschaltern zur Schrittsteuerung, elektronischen Steuerungen, Drehzahlmessung, Schwenkwinkelmessung und eines impulsgesteuerten Motors oder einer Kombination aus mehreren.

37. Verfahren nach einem der Ansprüch 26 bis 36, **gekennzeichnet durch** Verwendung einer rechts- und/oder linksdrehenden und/oder einer drehgeschwindigkeitsgeregelten Dosiertrommel.

38. Verfahren nach einem der Ansprüche 26 bis 37, **gekennzeichnet durch** die Verwendung eines Trommelgehäuses mit durchlaufender Schachtöffnung und einer in dem Gehäuse drehbeweglich angeordneten Dosiertrommel.

39. Verfahren nach einem der Ansprüche 26 bis 38, **gekennzeichnet durch** die Verwendung einer Dosiertrommel, die über ein Getriebe mit einem Antriebsmotor gekoppelt ist.

40. Verfahren nach Anspruch 39, **gekennzeichnet durch** die Verwendung einer Nut-Feder-Verbindung zwischen Dosiertrommel und Getriebe und/oder Verwendung eines Getriebes, das zugleich eine Trommelsteuerung bildet.

41. Verfahren nach Anspruch 40, **gekennzeichnet durch** die Verwendung eines Getriebes, bestehend aus einem Zahnradring und einem Ritzel auf der Antriebswelle des Motors.

42. Verfahren nach Anspruch 40 oder 41, **gekennzeichnet durch** die Verwendung eines als Kurvensteuerung ausgebildeten Getriebes.

43. Verfahren nach einem der Ansprüche 26 bis 42, **gekennzeichnet durch** die Verwendung einer Dichtung und/oder eines Dichtmittels an der Dosiertrommel bzw. an dem Linearfeeder.

44. Verfahren nach Anspruch 43, **gekennzeichnet durch** Verwendung einer Gummidichtung bei dem Einsatz von Pellet und/oder eine Dichtung aus einem thermoplastischen Kunststoff bei dem Einsatz von Pulver.

45. Verfahren nach Anspruch 43 oder 44, **gekennzeichnet durch** Verwendung einer auslanfseitig an der Dosiertrommel im Spalt zwischen Dosiertrommel und umgebendem Gehäuse angeordneten Dichtung.

46. Verfahren nach einem der Ansprüche 40 bis 42, **gekennzeichnet durch** Verwendung einer zusammengesetzten Dichtung oder einer einteiligen Dichtung

47. Verfahren nach Anspruch 43, **gekennzeichnet durch** die Verwendung eines Formteils als Dichtung und/oder von O-Ringen und zwischen den O-Ringen sitzenden geraden Dichtungslippen.

48. Verfahren nach einem der Ansprüche 24 bis 27, **gekennzeichnet durch** die Verwendung eines Linearfeeders, bestehend aus einem Zylinder mit einer darin hin- und hergehend bewegten Kolbenstange und zwei auf der Kolbenstange im Abstand voneinander sitzenden Kolben, wobei der Zylinder an den Vorratsbehälter angeschlossen ist und der Kolben bei seiner hin- und hergehenden Bewegung in den Vorratsbehälter hineinstößt, so daß Trockenkonzentrat zwischen die beiden Kolben dringt und bei dem nächsten Kolbenhub aus dem Zylinder herausgezogen wird.

49. Verfahren nach Anspruch 48, **gekennzeichnet durch** Verwendung eines senkrecht unter dem Vorratsbehälter angeordneten Linearfeeders.

50. Verfahren nach Anspruch 48, **gekennzeichnet durch** die Verwendung zweier Dichtungsscheiben als Kolben.

51. Verfahren nach Anspruch 48 oder 49, **gekennzeichnet durch** Verwendung eines Linearfeeders, dessen in senkrechter Stellung unterer Kolben mit einer Ablaufschräge versehen ist.

52. Verfahren nach einem der Ansprüche 48 bis 50, **gekennzeichnet durch** die Verwendung einer Kolbenstange, die mit den beiden Kolben ein Kunststoffspritzteil bildet.

53. Verfahren nach Anspruch 50 oder 51, **gekennzeichnet durch** die Verwendung eines unteren Kolbens, der als Membrandichtung und/oder pilzförmig oder hutförmig oder kegelförmig ausgebildet ist.

54. Verfahren nach Anspruch 52 oder 53, **gekennzeichnet durch** die Verwendung von Kunststoffkolben mit angeformten Dichtlippen.

55. Verfahren nach einem der Ansprüche 48 bis 54, **gekennzeichnet durch** die Verwendung von Mehrfachdichtungen an einem Kolben und/oder die Verwendung von vorratsbehälterseitigen Kolben mit gleicher Konfiguration wie der untere Kolben, aber in einer um 180 Grad versetzten Einbausituation.

56. Verfahren nach einem der Ansprüche 48 bis 55, **gekennzeichnet durch** die Verwendung eines an den Vorratsbehälter angeformten Zylinders oder die Verwendung eines Vorratsbehälters mit einer zylindrischen, der Kolbenstange und den Kolben angepaßten Auslaßöffnung.

57. Verfahren nach einem der Ansprüche 48 bis 56, **gekennzeichnet durch** Verwendung einer Kolbenstange mit einem Riemen- oder Kettenantrieb oder einem Linearmotorantrieb oder einem Hubzylinderantrieb oder einem Spindelantrieb oder einem Zahnstangenantrieb.

58. Verfahren nach Anspruch 57, **gekennzeichnet durch** die Verwendung von Zahnriemen oder Keilriemen.

59. Verfahren nach einem der Ansprüche 48 bis 58, **gekennzeichnet durch** die Verwendung von Kolben, von denen der dem Vorratsbehälter nächste Kolben mit einem O-Ring und der andere Kolben mit einer Lippendichtung versehen ist.

60. Verfahren nach einem der Ansprüche 48 bis 58, **dadurch gekennzeichnet, daß** die Kolbenstange zum Verschluß des Vorratsbehälters in eine Stellung gebracht wird, in der sich beide Kolben in dem Zylinder befinden.

61. Verfahren nach einem der Ansprüche 48 bis 60, **gekennzeichnet durch** Verwendung einer aufgesetzten Flasche als Vorratsbehälter, deren Flaschenhals den Zylinder bildet.

62. Verfahren nach einem der Ansprüche 48 bis 61. **gekennzeichnet durch** die Verwendung eines dem Zylinder vorgesetzten Führungsteils und/oder Einlaufteiles.

63. Verfahren nach einem der Ansprüche 1 bis 62, **gekennzeichnet durch** die Verwendung von einer oder mehreren Wasserdüsen (12,19) im Aktivatorbehälter zum Vorbenetzen und/oder Mischen und/oder Reinigen.

64. Verfahren nach Anspruch 63, **dadurch gekennzeichnet, daß** Wasser und Trockenkonzentrat im Wechsel aufgegeben werden.

65. Verfahren nach Anspruch 64, **dadurch gekennzeichnet, daß** zwischen den Zugabeintervallen eine Mischung erfolgt.

66. Verfahren nach einem der Ansprüche 63 bis 65, **gekennzeichnet durch** die Verwendung von Düsen (19) am Behälterboden und/oder am oberen Behälterrand und/oder Düsen im Behälterdeckel und/oder in der Behälterwand and/oder im Behälter.

67. Verfahren nach Anspruch 63, **dadurch gekennzeichnet, daß** zunächst das Trockenkonzentrat in dem Aktivatorbehälter (3) aufgegeben wird und dann die Wasserdüsen (19) im oder am Behälterboden betätigt werden.

68. Verfahren nach einem der Ansprüche 63 bis 67, **dadurch gekennzeichnet, daß** Wasser bis zu einem vorläufigen Füllstand in den Aktivatorbehälter (3) eingespeist wird.

69. Verfahren nach einem der Ansprüche 1 bis 68, **dadurch gekennzeichnet, daß** nach Ablauf der Aktivierungszeit eine weitere Badbewegung der Suspension oder Lösung im Aktivatorbehälter (3) erfolgt.

70. Verfahren nach den Ansprüche 63 bis 69, **gekennzeichnet durch** eine Betätigung der Wasserdüsen (12,19) zur weiteren Badbewegung und Mischung.

71. Verfahren nach Anspruch 70, **dadurch gekennzeichnet, daß** die zur Badbewegung und Mischung verwendete Wassermenge ganz oder teilweise zugleich zur Aktivierung der Enzyme und Bakterien verwendet wird oder daß gleichzeitig an anderer Stelle Wasser abgezogen wird.

72. Verfahren nach einem der Ansprüche 63 bis 71, **gekennzeichnet durch** eine Betätigung der Wasserdüsen (12,19) zur Reinigung.

73. Verfahren nach einem der Ansprüche 63 bis 72, **gekennzeichnet durch** die Verwendung schräg und/oder tangential angestellter Düsen (12,19).

74. Verfahren nach einem der Ansprüche 63 bis 73, **gekennzeichnet durch** die Verwendung von Düsen (12,19), die gegen die Behälterwand und/oder in den Behälterauslaß (16) gerichtet sind.

75. Verfahren nach einem oder mehreren der Ansprüche 63 bis 74, **gekennzeichnet durch** die kontinuierliche oder intervallmäßige Beaufschlagung der Düsen (12,19) mit Wasser.

76. Verfahren nach cincm der Ansprüche 1 bis 75, **gekennzeichnet durch** die Steuerung des Wasserzulaufes im Aktivatorbehälter mittels eines Niveauschalters (17) und/oder eines Zeitschalters.

77. Verfahren nach Anspruch 76, **gekennzeichnet durch** die Verwendung eines Schwimmschalters oder eines außen am Aktivatorbehälter angeordneten kapazitiven Schalters.

78. Verfahren nach einem der Ansprüche 1 bis 77, **gekennzeichnet durch** die Verwendung eines Aktivatorbehälters mit Überlauf oder einem Stopfenverschluß

79. Verfahren nach einem der Ansprüche 2 bis 78, **gekennzeichnet durch** Verwendung eines Siebes vor der Ablauf/Austrittsöffnung des Aktivatorbehälters, wenn Pellets und/oder Konzentratkörner eingesetzt werden.

80. Verfahren nach Anspruch 78 oder 79, **gekennzeichnet durch** die Verwendung eines Hohlstopfens (13) am Behälterauslaß (16), dessen rohrförmiges, nach oben ragendes, offenes Ende als Überlauf den maximalen Füllstand bestimmt.

81. Verfahren nach Anspruch 80, **gekennzeichnet durch** die Verwendung einer kegelförmigen Abdeckung (18) des Überlaufs.

82. Verfahren nach einem der Ansprüche 2 bis 81, **gekennzeichnet durch** Verwendung eines Aktivatorbehälters, bei dem der Behälterauslauf nicht genau vertikal unter der Aufgabe des Trockenkonzentrats angeordnet ist.

83. Verfahren nach einem der Ansprüche 2 bis 82, **gekennzeichnet durch** Verwendung eines Konzentratverteilers.

84. Verfahren nach Anspruch 83, **gekennzeichnet durch** die Verwendung einer Prallfläche für die Konzentratverteilung.

85. Verfahren nach Anspruch 84, **gekennzeichnet durch** Verwendung einer umlaufenden Prallfläche.

86. Verfahren nach einem oder mehreren der Ansprüche 1 bis 85, **dadurch gekennzeichnet, daß** auch eine vertikale Badbewegung erfolgt.

87. Verfahren nach einem oder mehreren der Ansprüche 1 bis 86, **gekennzeichnet durch** die Verwendung von horizontal drehenden Pumpenkreiseln und/oder Pumpenläufern und/oder Pumpenrädern.

88. Verfahren nach Anspruch 87, **gekennzeichnet durch** Verwendung von Pumpenkreisel/Läufer/Räder, die am Behälterboden angeordnet und dem Behälterboden angepaßt sind.

89. Verfahren nach Anspruch 87 oder 88, **dadurch gekennzeichnet, daß** die horizontale Strömung in eine vertikale Strömung umgelenkt wird.

90. Verfahren nach einem der Ansprüche 87 bis 89, **gekennzeichnet durch** die Verwendung von Pumpenkreiseln/Läufern/Rädern, deren Höhe über dem Behälterboden zur Behälterhöhe mindestens 1:30 und maximal 1:3 beträgt

91. Verfahren nach Anspruch 90, **gekennzeichnet durch** Verwendung von Pumpenkreiseln/Läufern/Rädern, deren Höhe 10 bis 30 mm beträgt.

92. Verfahren nach einem der Ansprüche 87 bis 91, **gekennzeichnet durch** die Verwendung von zwei übereinander angeordneten Pumpenkreiseln/Läufern/Rädern, von denen der obere für die Umwälzung bzw. Mischung und der untere für das Abpumpen bestimmt ist.

93. Verfahren nach Anspruch 92, **gekennzeichnet durch** die Verwendung einer Welle/Achse auf der beide Pumpenkreisel/Läufer/Räder sitzen, wobei jeder Kreisel/Läufer/Rad die Förderwirkung in einer anderen Drehrichtung hat und bei Drehung in der Nichtförderrichtung frei mitläuft.

94. Verfahren nach Anspruch 87 bis 93, **gekennzeichnet durch** Verwendung von Pumpenkreisel/Läufern/Rädern mit gebogenen Flügeln, wobei die Flügel des einen Kreisels/Läufers/Rades zum anderen Kreisel/Läufer/Rad in eine entgegengesetzte Umfangsrichtung gebogen sind.

95. Verfahren nach Anspruch 94, **gekennzeichnet durch** die Verwendung von Flügeln mit einem Biegeradius, der mindestens gleich ¼ des Kreisel/Läufer/Rad-Durchmessers ist und höchstens gleich ½ des Kreisel/Läufer/Rad-Durchmessers ist.

96. Verfahren nach Anspruch 87 bis 95, **gekennzeichnet durch** die Verwendung strömungsführender Einbauten und/oder Profile im Aktivatorbehälter.

97. Verfahren nach Anspruch 96, **gekennzeichnet durch** die Verwendung von vertikal verlaufenden Rippen an der Behälterinnenseite, die um ein Maß (Höhe) in den Aktivatorbiehälter ragen, das mindestens 10% und/oder maximal 50% vom Radius des Aktivatorbehälters beträgt.

98. Verfahren nach Anspruch 96 oder 97, **gekennzeichnet durch** die Verwendung von Rippen, die im Abstand vom oberen Behälterrand enden.

99. Verfahren nach einem der Ansprüche 96 bis 98, **gekennzeichnet durch** die Verwendung von Rippen, deren Abstand vom oberen Behälterrand mindestens gleich ¼ des Behälterdurchmessers ist.

100. Verfahren nach einem der Ansprüche 96 bis 99, **gekennzeichnet durch** die Verwendung von Rippen die eine Länge besitzen, die maximal gleich ¾ des Behälterdurchmessers ist und/oder die vom Behälterboden aus beginnen.

101. Verfahren nach einem der Ansprüchel bis 100, **gekennzeichnet durch** Beibehaltung eines gleichbleibenden Behälterdwchinessers und Anpassung der Behälterhöhe bzw. Behälterlänge an ein gewünschtes Behältervolumen und/oder eine Behälterlänge, die höchstens gleich dem 8fachen Behälterdurchmesser ist.

102. Verfahren nach Anspruch 101, **dadurch gekennzeichnet, daß** ein Aktivatorbehälter verwendet wird, dessen Behälterdurchmesser zwischen 100 und 300 mm beträgt.

103. Verfahren nach einem der Ansprüche 1 bis 102, **dadurch gekennzeichnet, daß** die Suspension/Lösung nach Erreichen des gewünschten Wachstums der Enzyme und Bakterien abgepumpt wird.

104. Verfahren nach einem der Ansprüche 86 bis 103, **dadurch gekennzeichnet, daß** eine gleiche Pumpe für die vertikale Badbewegung wie für das Abpumpen verwendet wird und umgekehrt.

105. Verfahren nach einem der Ansprüche 87 bis 104, **dadurch gekennzeichnet, daß** Kreisel/Läufer/Räder verwendet werden, die oben mit einer ringförmigen Scheibe versehen sind.

106. Verfahren nach Anspruch 105, **gekennzeichnet durch** die Verwendung ringförmiger Scheiben, die mittig eine Öffnung frei lassen und/oder mit dem Kreisel/Läufer/Rad-Rand abschließen und/oder Kanäle bilden.

107. Verfahren nach einem der Ansprüche 87 bis 106, **gekennzeichnet durch** die Verwendung von zwei übereinander angeordneten Pumpenorganen im Aktivatorbehälter, von denen das untere für die Entleerung und das obere für die Umwälzung bzw. Mischung vorgesehen ist.

108. Verfahren nach einem der Ansprüche 87 bis 107, **gekennzeichnet durch** die Verwendung eines Aktivatorbehälters, der das untere Pumpenorgan mit einem ringförmigen Kanal zur Aufnahme der Flüssigkeit umgibt.

109. Verfahren nach einem der Ansprüche 105 bis 108, **gekennzeichnet durch** die Verwendung von Pumpen, deren mittige Öffnung und/oder der Kanal zumindest im Bereich der Ansaugöffnung mit eine Siebabdeckung versehen ist.

110. Verfahren nach einem der Ansprüche 105 bis 109, **gekennzeichnet durch** die Verwendung eines Aktivatorbehälters, der die beiden Pumpenorgane mit einem Steg umgibt, der an der ringförmigen Scheibe des unteren Pumpenorgans endet.

111. Verfahren nach einem der Ansprüche 87 bis 110, **gekennzeichnet durch** die Verwendung von Pumpenorganen, von denen das eine Pumpenorgan mit einem Rohr versehen ist und das andere Pumpenorgan auf dem Rohr sitzt.

112. Verfahren nach Anspruch 111, **dadurch gekennzeichnet, daß** durch das Rohr Luft in die Suspension oder Lösung geleitet wird.

113. Verfahren nach einem der Ansprüche 87 bis 112, **dadurch gekennzeichnet, daß** die Pummpendrehzahl zumindest während des Umwälzvorganges kleiner als 1500 Upm gehalten wird.

114. Verfahren nach Anspruch 113, **dadurch gekennzeichnet, daß** die Pumpendrehzahl kleiner als 500 Upm gehalten wird.

115. Verfahren nach Anspruch 114, **dadurch gekennzeichnet, daß** die Pumpendrehzahl zwischen 100 und 300 Upm gehalten wird.

116. Verfahren nach einem der Ansprüche 87 bis 115, **dadurch gekennzeichnet, daß** die Pumpendrehzahl zum Abpumpen erhöht wird.

117. Verfahren nach einem der Ansprüche 87 bis 116, **gekennzeichnet durch** die Verwendung einer drehzahlregelbaren Pumpe.

118. Verfahren nach einem der Ansprüche 3 bis 117, **dadurch gekennzeichnet, daß** die zur Aktivierung der Enzyme und Bakterien vorgesehene Luft zugleich von dem Pumpenorgan für die Umwälzung bzw.Mischung angesogen wird und/oder durch eine separate Pumpe zudosiert wird.

119. Verfahren nach Anspruch 118, **gekennzeichnet durch** die Verwendung einer bis in die Unterdruckzone des Pumpenorgans für die Umwälzung führenden Luftleitung.

120. Verfahren nach einem der Ansprüche 2 bis 114, **gekennzeichnet durch** eine geneigte Anordnung des Aktivatorbehälters.

121. Verfahren nach einem der Ansprüche 1 bis 120, **gekennzeichnet durch** die Verwendung von bakterienfesten und enzymfesten Werkstoffen.

122. Verfahren nach Anspruch 121, **gekennzeichnet durch** die Verwendung von gespritztem Teflon und/oder Poleyethylen(PE) und/oder Polypropylen (PP) und/ Polyoximethylen (POM) und/oder Edelstahl für die eines oder mehrere Vorrichtungsteile.

123. Verfahren nach einem der Ansprüche 1 bis 122, **dadurch gekennzeichnet, daß** bei der Anordnung des Gerätes in Abwasserströmungsrichtung vor einem Syphon, der Syphon beim oder nach dem Ablassen der Suspension oder Lösung mindestens einmal durchgespült wird.

124. Verfahren nach einem oder mehreren der Ansprüche 1 bis 123, **gekennzeichnet durch** die Verwendung von Antiblockingmittel im Trockenkonzentrat.

125. Verfahren nach Anspruch 118, **gekennzeichnet durch** die Verwendung von Bims oder Kreide als Antiblockingmittel.

## Claims

1. Process for the clearing of grease by means of a grease solvent with enzymes and bacteria in an aqueous form as the grease solvent and for the clearing of drainage pipes and/or grease traps, **characterised in that** the grease solvent is produced in situ by combining dry concentrate and water, the water and the dry concentrate first being put into an activator container (3) and activated there, and subsequently introduced into the drainage pipe and/or the grease trap.

2. Process according to Claim 1, **characterised in that** the dry concentrate is circulated and the propagation temperature for the enzymes and/or bacteria is maintained and/or air is introduced into the liquid.

3. Process according to Claim 1 or 2, **characterised by** the use of concentrate in powder form and/or concentrate pellets and/or concentrate granules.

4. Process according to Claim 3, according to one of Claims 1 to 4, **characterised in that** the concentrate is produced by freeze-drying and subsequent grinding and/or by pelletising before and/or after freeze-drying.

5. Process according to Claim 4, **characterised by** the pelletising of the starting material between rollers or by squeezing the starting material through nozzles to form strands and then granulating the strands.

6. Process according to Claim 4 or 5, **characterised by** a classification of the ground material and/or granulated material and/or separation of undersized and/or oversized granules.

7. Process according to one of Claims 1 to 6,
**characterised in that** first the dry concentrate and then the water are put into the activator container and/or the resulting suspension or solution is put into the drainage pipe at the latest at the grease trap or at a comparable position.

8. Process according to one of Claims 1 to 7, **characterised by** a cleaning of the activator container with water after emptying the suspension into a drainage pipe or into a grease trap.

9. Process according to one of Claims 1 to 8, **characterised by** the production of the dry concentrate by way of freeze-drying.

10. Process according to one of Claims 1 to 9, **characterised in that** the effectiveness of the suspension or solution is set by a proportion of dry concentrate of from 4 to 100 grams per litre.

11. Process according to one of Claims 1 to 10, **characterised in that** the residence time of the dry concentrate in the activator container (3) is at least 0.5 hours.

12. Process according to one of Claims 1 to 11, **characterised in that** filling times for the activator container are measured and/or the activation time is measured.

13. Process according to one of Claims 1 to 12, **characterised in that** separation/deposition is avoided by a movement of the bath in the activator container and/or by rinsing the container after emptying of the container.

14. Process according to one of Claims 1 to 13, **characterised in that** the suspension or solution is fed intermittently or continuously into the drainage pipe or into the grease trap.

15. Process according to Claim 14, **characterised in that** the introduction of the suspension or solution takes place independently of the incidence of grease and/or dependent upon the incidence of grease.

16. Process according to Claim 14, **characterised in that** matching to the incidence of grease takes place by measurement of the waste-water flow or dependent on time independently of flow rate.

17. Process according to Claim 16, **characterised in that** the measured incidence of grease is entered into a computer, which controls the application of the suspension or solution using this measurement, or **in that** a fixed amount of suspension or solution determined by experience or by trials is applied and/or the fixed amount is fed into the drainage pipe in portions.

18. Process according to one of Claims 1 to 17, **characterised in that** suspension or solution is put into the drainage pipe at least daily and/or no application takes place at weekends, on public holidays or when the business is closed.

19. Process according to Claim 18, **characterised by** the use of an ADP control with freely programmable rest days.

20. Process according to Claim 19, **characterised in that** the suspension or solution is applied during the cessation of business between two consecutive working days.

21. Process according to one of Claims 18 to 20, **characterised by** the use of a time switch and/or a controller (4) to actuate the parts of the apparatus.

22. Process according to Claim 21, **characterised by** a time switch with several switching intervals for one or more functions of the suspension/solution production or for the production of the solution.

23. Process according to one of Claims 1 to 22, **characterised by** the use of a storage container (5), a linearly or circularly operating dosing device arranged beneath the storage container (5) for the dosing of dry concentrate into an activator container (3) arranged beneath this, the dosing device feeding the amount of dry concentrate envisaged for the dosing into the activator container (3) for mixing with water or dissolving in water as appropriate in one or more steps.

24. Process according to Claim 23, **characterised by** the use of a dosing drum (2) or a cell wheel or dosing scales or a linear feeder.

25. Process according to Claim 24, **characterised by** the use of a drum with at least one recess or pocket (23) on its circumference.

26. Process according to Claim 24 or 25, **characterised in that**, after emptying into the activator container, the drum or the linear feeder remains in the emptying position until the next dosing process.

27. Process according to one of Claims 24 to 26, **characterised in that**, immediately after emptying into the activator container, the drum is turned or the linear feeder is moved until the recess in the drum is sealed with respect to the activator container or the filling opening of the linear feeder is sealed.

28. Process according to Claim 27, **characterised in that**, immediately after emptying, the drum or the linear feeder is returned to the filling position if this is not detrimental to the dry concentrate.

29. Process according to one of Claims 24 to 28, **characterised in that** the drum is turned for emptying until the recess in the drum forms an angled outlet surface in the emptying position.

30. Process according to one of Claims 24 to 29, **characterised in that**, after emptying, the drum is turned to seal the opening until the recess is at right angles to a line which passes through the centre of the outlet opening of the storage container and through the centre of the inlet opening of the activator container.

31. Process according to one of Claims 24 to 30, **characterised in that**, for filling, the drum is turned until the recess forms an angled inlet surface in the filling position.

32. Process according to one of Claims 29 to 31, **characterised in that** the angled inlet or outlet surface remains unchanged over a period of time by stopping the drum or is controlled by varying the speed of the drum.

33. Process according to one of Claims 26 to 32, **characterised by** the use of a dosing drum (2) or cell wheel whose recess/pocket (23) has a pick-up volume that is less than the amount of dry concentrate envisaged for one production process.

34. Process according to one of Claims 26 to 33, **characterised by** the use of the same dosing drums or cell wheels for different quantities of dry concentrate and by changing the dosing movements to suit the change in quantities.

35. Process according to one of Claims 26 to 34, **characterised by** the use of a stepper motor for the drive to the dosing drums or cell wheels.

36. Process according to Claim 29, **characterised by** the use of a circuit selected from limit switches for step control, electronic controllers, speed measurement, measurement of angle of pivot and a pulse-controlled motor or a combination of several of these.

37. Process according to one of Claims 26 to 36, **characterised by** the use of a dosing drum that can rotate clockwise and/or anticlockwise and/or the rotational speed of which is controlled.

38. Process according to one of Claims 26 to 37, **characterised by** the use of a drum housing with a continuous shaft opening running through it and a dosing drum arranged so that it can rotate within the housing.

39. Process according to one of Claims 26 to 38, **characterised by** the use of a dosing drum which is connected to a drive motor via a gear.

40. Process according to Claim 39, **characterised by** the use of a key-slot connection between the dosing drum and the gear and/or the use of a gear that simultaneously forms a drum controller.

41. Process according to Claim 40, **characterised by** the use of a gear consisting of a toothed wheel and a pinion on the drive shaft of the motor.

42. Process according to Claim 40 or 41, **characterised by** the use of a gear designed as a cam controller.

43. Process according to one of Claims 26 to 42, **characterised by** the use of a seal and/or a sealing medium on the dosing drum or on the linear feeder as appropriate.

44. Process according to Claim 43, **characterised by** the use of a rubber seal when using pellets and/or a seal made from a thermoplastic material when using powder.

45. Process according to Claim 43 or 44, **characterised by** the use of a seal arranged on the outlet side of the dosing drum in the gap between the dosing drum and the surrounding housing.

46. Process according to one of Claims 40 to 42, **characterised by** the use of a composite seal or a one-piece seal.

47. Process according to Claim 43, **characterised by** the use of a moulded part as a seal and/or of O-rings and straight sealing lips lying between the O-rings.

48. Process according to one of Claims 24 to 27, **characterised by** the use of a linear feeder consisting of a cylinder with a reciprocating piston rod and two pistons mounted on the piston rod spaced apart from one another, and where the cylinder is connected to the storage container and the piston drives into the storage container when it moves backwards and forwards so that dry concentrate penetrates between the two pistons and is drawn out of the cylinder on the next stroke of the piston.

49. Process according to Claim 48, **characterised by** the use of a linear feeder arranged vertically beneath the storage container.

50. Process according to Claim 48, **characterised by** the use of two sealing discs as pistons.

51. Process according to Claim 48 or 49, **characterised by** the use of a linear feeder whose lower piston in the vertical position is equipped with an outlet slope.

52. Process according to one of Claims 48 to 50, **characterised by** the use of a piston rod, which together with the two pistons forms a plastic injection-moulded part.

53. Process according to Claim 50 or 51, **characterised by** the use of a lower piston, which is constructed as a membrane seal and/or is mushroom-shaped or hat-shaped or cone-shaped.

54. Process according to Claim 52 or 53, **characterised by** the use of plastic pistons with moulded sealing lips.

55. Process according to one of Claims 48 to 54, **characterised by** the use of multiple seals on one piston and/or the use of pistons on the storage container side with the same configuration as the lower piston but mounted displaced by 180 degrees.

56. Process according to one of Claims 48 to 55, **characterised by** the use of a cylinder moulded onto the storage container or the use of a storage container with a cylindrical outlet opening matched to the piston rod and the pistons.

57. Process according to one of Claims 48 to 56, **characterised by** the use of a piston rod with a belt or chain drive or a linear motor drive or a reciprocating cylinder drive or a spindle drive or a toothed rack drive.

58. Process according to Claim 57, **characterised by** the use of toothed belts or V-belts.

59. Process according to one of Claims 48 to 58, **characterised by** the use of pistons where the piston nearest the storage container is provided with an O-ring and the other piston is provided with a sealing lip.

60. Process according to one of Claims 48 to 58, **characterised in that** the piston rod is brought into a position in which both pistons are within the cylinder in order to seal the storage container.

61. Process according to one of Claims 48 to 60, **characterised by** the use of an attached flask as a storage container and where the neck of the flask forms the cylinder.

62. Process according to one of Claims 48 to 61, **characterised by** the use of a guide piece and/or inlet piece positioned before the cylinder.

63. Process according to one of Claims 1 to 62, **characterised by** the use of one or more water nozzles (12, 19) in the activator container for pre-coating and/or mixing and/or cleaning.

64. Process according to Claim 63, **characterised in that** water and dry concentrate are added alternately.

65. Process according to Claim 64, **characterised in that** mixing takes place between the feed intervals.

66. Process according to one of Claims 63 to 65, **characterised by** the use of nozzles (19) at the base of the container and/or at the upper rim of the container and/or nozzles in the lid of the container and/or in the container wall and/or in the container.

67. Process according to Claim 63, **characterised in that** the dry concentrate is first fed into the activator container (3) and then the water nozzles (19) in or at the base of the container are actuated.

68. Process according to one of Claims 63 to 67, **characterised in that** water is fed into the activator container (3) up to a preliminary filling level.

69. Process according to one of Claims 1 to 68, **characterised in that** after the activation time has expired, a further movement of the suspension or solution bath in the activator container (3) takes place.

70. Process according to Claims 63 to 69, **characterised by** actuation of the water nozzles (12, 19) for further movement of the bath and for mixing.

71. Process according to Claim 70, **characterised in that** the quantity of water used for moving the bath and for mixing is at the same time used totally or in part for activating the enzymes and bacteria or **in that** water is drawn off at the same time from another point.

72. Process according to one of Claims 63 to 71, **characterised by** an actuation of the water nozzles (12, 19) for cleaning.

73. Process according to one of Claims 63 to 72, **characterised by** the use of nozzles (12, 19) mounted at an angle and/or tangentially.

74. Process according to one of Claims 63 to 73, **characterised by** the use of nozzles (12, 19) which are directed against the container wall and/or into the container outlet (16).

75. Process according to one or more of Claims 63 to 74, **characterised by** the continuous or intermittent supply of water to the nozzles (12, 19).

76. Process according to one of Claims 1 to 75, **characterised by** the control of the water supply in the activator container by means of a level switch (17) and/or a time switch.

77. Process according to Claim 76, **characterised by** the use of a float switch or a capacitive switch arranged on the outside of the activator container.

78. Process according to one of Claims 1 to 77, **characterised by** the use of an activator container with an overflow or a plug closure.

79. Process according to one of Claims 2 to 78, **characterised by** the use of a sieve before the outlet/exit opening of the activator container when pellets and/or concentrate granules are used.

80. Process according to Claim 78 or 79, **characterised by** the use of a hollow plug (13) at the outlet (16) of the container, whose open, tubular, upward-protruding end, acting as an overflow, determines the maximum filling level.

81. Process according to Claim 80, **characterised by** the use of a cone-shaped cover (18) for the overflow.

82. Process according to one of Claims 2 to 81, **characterised by** the use of an activator container in which the outlet of the container is not arranged exactly vertically beneath the dry concentrate feed.

83. Process according to one of Claims 2 to 82, **characterised by** the use of a concentrate distributor.

84. Process according to Claim 83, **characterised by** the use of a baffle surface for the distribution of concentrate.

85. Process according to Claim 84, **characterised by** the use of a revolving baffle surface.

86. Process according to one or more of Claims 1 to 85, **characterised in that** a vertical movement of the bath also takes place.

87. Process according to one or more of Claims 1 to 86, **characterised by** the use of horizontally rotating pump rotors and/or pump impellers and/or pump wheels.

88. Process according to Claim 87, **characterised by** the use of pump rotors/impellers/wheels, which are arranged on the base of the container and are matched to the base of the container.

89. Process according to Claim 87 or 88, **characterised in that** the horizontal flow is deflected into a vertical flow.

90. Process according to one of Claims 87 to 89, **characterised by** the use of pump rotors/impellers/wheels whose height above the base of the container to the height of the container is at least 1:30 and at most 1:3.

91. Process according to Claim 90, **characterised by** the use of pump rotors/impellers/wheels whose height is from 10 to 30 mm.

92. Process according to one of Claims 87 to 91, **characterised by** the use of two pump rotors/impellers/wheels arranged one above the other, of which the upper is intended for circulation or mixing and the lower for pumping out.

93. Process according to Claim 92, **characterised by** the use of a shaft/axle on which both pump rotors/impellers/wheels sit, and where each rotor/impeller/wheel effects a flow in a different direction of rotation and runs freely with the other when rotating in the non-flow direction.

94. Process according to Claims 87 to 93, **characterised by** the use of pump rotors/impellers/wheels with bent vanes, where the vanes of one rotor/impeller/wheel are bent in the opposite circumferential direction to the other rotor/impeller/wheel.

95. Process according to Claim 94, **characterised by** the use of vanes with a bending radius that is at least equal to ¼ of the diameter of the rotor/impeller/wheel and at most equal to % of the diameter of the rotor/impeller/wheel.

96. Process according to Claim 87 to 95, **characterised by** the use of flow-guiding inserts and/or profiles in the activator container.

97. Process according to Claim 96, **characterised by** the use of ribs running vertically on the inside of the container, which extend into the activator container by a distance (height) that is at least 10% and/or a maximum of 50% of the radius of the activator container.

98. Process according to Claim 96 or 97, **characterised by** the use of ribs that end at a distance from the upper rim of the container.

99. Process according to one of Claims 96 to 98, **characterised by** the use of ribs whose distance from the upper rim of the container is at least equal to ¼ of the diameter of the container.

100. Process according to one of Claims 96 to 99, **characterised by** the use of ribs that have a length, which at maximum is equal to ¾ of the diameter of the container and/or which start from the base of the container.

101. Process according to one of Claims 1 to 100, **characterised by** maintaining a constant container diameter and matching the height of the container or the length of the container to a desired container volume and/or a container length, which at maximum is equal to 8 times the container diameter.

102. Process according to Claim 101, **characterised in that** an activator container is used whose diameter is between 100 and 300 mm.

103. Process according to one of Claims 1 to 102, **characterised in that** the suspension/solution is pumped out after the desired growth of the enzymes and bacteria is reached.

104. Process according to one of Claims 86 to 103, **characterised in that** the same pump is used for the vertical movement of the bath as for pumping out and vice versa.

105. Process according to one of Claims 87 to 104, **characterised in that** rotors/impellers/wheels are used, which are equipped with a ring-shaped disc at the top.

106. Process according to Claim 105, **characterised by** the use of ring-shaped discs, which leave an opening free in the centre and/or form a seal with the edge of the rotor/impeller/wheel and/or form channels.

107. Process according to one of Claims 87 to 106, **characterised by** the use of two pump mechanisms arranged one above the other in the activator container, of which the lower is intended for emptying and the upper for circulation or mixing.

108. Process according to one of Claims 87 to 107, **characterised by** the use of an activator container that encircles the lower pump mechanism with a ring-shaped channel for collecting the liquid.

109. Process according to one of Claims 105 to 108, **characterised by** the use of pumps whose central opening and/or the channel at least in the area of the suction opening is equipped with a filter cover.

110. Process according to one of Claims 105 to 109, **characterised by** the use of an activator container that encircles the two pump mechanisms with a web, which ends at the ring-shaped disc of the lower pump mechanism.

111. Process according to one of Claims 87 to 110, **characterised by** the use of pump mechanisms, of which one pump mechanism is equipped with a tube and the other pump mechanism sits on the tube.

112. Process according to Claim 111, **characterised in that** air is introduced into the suspension or solution through the tube.

113. Process according to one of Claims 87 to 112, **characterised in that** the pump speed is maintained at less than 1500 rpm at least during the circulation process.

114. Process according to Claim 113, **characterised in that** the pump speed is maintained at less than 500 rpm.

115. Process according to Claim 114, **characterised in that** the pump speed is maintained at between 100 and 300 rpm.

116. Process according to one of Claims 87 to 115, **characterised in that** the pump speed is increased when pumping out.

117. Process according to one of Claims 87 to 116, **characterised by** the use of a speed-controlled pump.

118. Process according to one of Claims 3 to 117, **characterised in that** the air provided for activating the enzymes and bacteria is sucked in by the same pump mechanism as is used for the circulation or mixing and/or is measured in by a separate pump.

119. Process according to Claim 118, **characterised by** the use of an air pipe leading into the negative-pressure zone of the pump mechanism for the circulation.

120. Process according to one of Claims 2 to 114, **characterised by** an angled arrangement of the activator container.

121. Process according to one of Claims 1 to 120, **characterised by** the use of bacteria-resistant and enzyme-resistant materials.

122. Process according to Claim 121, **characterised by** the use of sprayed Teflon and/or polyethylene (PE) and/or polypropylene (PP) and/or polyoxymethylene (POM) and/or stainless steel for one or more parts of the apparatus.

123. Process according to one of Claims 1 to 122, **characterised in that** when the device is arranged before a siphon when viewed in the direction of waste water flow, the siphon is rinsed through at least once when or after the suspension or solution is run off.

124. Process according to one or more of Claims 1 to 123, **characterised by** the use of anti-blocking agents in the dry concentrate.

125. Process according to Claim 118, **characterised by** the use of pumice or chalk as an anti-blocking agent.

## Revendications

1. Procédé de nettoyage de graisses au moyen d'un solvant dégraissant, comportant des enzymes et des bactéries, se présentant sous forme aqueuse, en tant que solvant dégraissant et pour le nettoyage des conduites d'eaux usées et/ou des séparateurs à graisses, **caractérisé en ce que** le solvant dégraissant est fabriqué in situ par assemblage d'un concentrat sec et d'eau, l'eau et le concentrat sec étant d'abord fournis dans un récipient d'activateur (3) et y étant activés et étant ensuite dirigés dans la conduite d'eaux usées et/ou le séparateur à graisses.

2. Procédé selon la revendication 1, **caractérisé en ce que** le concentrat sec est mis en circulation et la température de croissance des enzymes et/ou des bactéries est respectée et/ou de l'air est introduit dans le liquide.

3. Procédé selon la revendication 1 ou 2, **caractérisé par** l'utilisation de concentrat pulvérulent et/ou de boulettes de concentrat et/ou de granulés de concentrat.

4. Procédé selon la revendication 3, selon l'une des revendications 1 à 4, **caractérisé en ce que** le concentrat est produit par séchage par congélation et broyage subséquent et/ou par formation en boulettes avant et/ou après le séchage par congélation.

5. Procédé selon la revendication 4, **caractérisé par** la formation de boulettes du matériau initial entre des rouleaux et/ou par pressage du matériau initial à travers des buses pour former des boudins et, ensuite, granulation des boudins.

6. Procédé selon la revendication 4 ou 5, **caractérisé par** un tri du produit broyé et/ou du granulat et/ou une séparation du grain inférieur et/ou du grain supérieur.

7. Procédé selon l'une des revendications 1 à 6, **caractérisé en ce que** l'on fournit d'abord le concentrat sec et ensuite l'eau dans le récipient d'activateur, et/ou la suspension et/ou la solution est fournie au plus tard au séparateur de graisses ou à un endroit comparable dans la conduite d'eaux usées.

8. Procédé selon l'une des revendications 1 à 7, **caractérisé par** un nettoyage à l'eau du récipient d'activateur, après vidange de la suspension dans une conduite d'eaux usées ou dans un séparateur à graisses.

9. Procédé selon l'une des revendications 1 à 8, **caractérisé par** la production du concentrat sec au cours du séchage par congélation.

10. Procédé selon l'une des revendications 1 à 9, **caractérisé en ce que** l'efficacité de la suspension ou de la solution est réglée par le biais des proportions de concentrat sec, de 4 à 100 grammes par litre.

11. Procédé selon l'une des revendications 1 à 10, **caractérisé en ce que** le temps de séjour du concentrat sec dans le récipient d'activateur (3) est d'au moins 0,5 heure.

12. Procédé selon l'une des revendications 1 à 11, **caractérisé en ce que** les temps de remplissage du récipient d'activateur sont mesurés et/ou le temps d'activation est mesuré.

13. Procédé selon l'une des revendications 1 à 12, **caractérisé en ce que** l'on élimine le risque de ségrégation/déposition avec un déplacement du bain se trouvant dans le récipient d'activateur et/ou avec un rinçage du récipient, effectué après vidange du récipient.

14. Procédé selon l'une des revendications 1 à 13, **caractérisé en ce que** la suspension ou la solution est fournie de façon intermittente ou continue dans la conduite d'eaux usées ou dans le séparateur à graisses.

15. Procédé selon la revendication 14, **caractérisé en ce que** la fourniture de la suspension ou de la solution se fait indépendamment de la production de graisses et/ou en fonction de la production de graisses.

16. Procédé selon la revendication 14, **caractérisé en ce que** l'adaptation à la production de graisses se fait par mesure de l'écoulement d'eaux usées ou de façon indépendante du débit masse, en fonction du temps.

17. Procédé selon la revendication 16, **caractérisé en ce que** la production mesurée de graisses est introduite dans un ordinateur, qui, à l'aide de la valeur de mesure, commande l'alimentation en suspension et/ou en solution, ou **en ce qu'**une quantité, fixée selon l'expérience ou selon les essais, de suspension ou de solution est fournie et/ou la quantité fixée est fournie par portions dans la conduite d'eaux usées.

18. Procédé selon l'une des revendications 1 à 17, **caractérisé en ce qu'**on fournit au moins quotidiennement une suspension ou une solution dans la conduite d'eaux usées et/ou aux fins de semaine et périodes de jours fériés, et aucune fourniture n'est faite pendant les congés d'exploitation.

19. Procédé selon la revendication 18, **caractérisé par** l'utilisation d'une commande informatique avec des jours de repos librement programmés.

20. Procédé selon la revendication 19, **caractérisé en ce que** la suspension ou la solution est fournie pendant le repos d'exploitation entre deux jours de travail subséquents.

21. Procédé selon l'une des revendications 18 à 20, **caractérisé par** l'utilisation d'une minuterie à contact et/ou d'une commande (4) pour activer les parties du dispositif.

22. Procédé selon la revendication 21, **caractérisé par** une minuterie comportant plusieurs intervalles de commutation pour une ou plusieurs fonctions de la production de la suspension/solution ou pour produire la solution.

23. Procédé selon l'une des revendications 1 à 22, **caractérisé par** l'utilisation d'un réservoir de stockage (5), d'un dispositif de dosage disposé sous le réservoir de stockage (5), travaillant de façon linéaire ou circulaire pour procéder au dosage du concentrat sec dans un récipient d'activateur (3) disposé au-dessous, le dispositif de dosage fournissant la quantité prévue pour le dosage en concentrat sec en une ou plusieurs étapes dans le récipient d'activateur (3) pour effectuer un mélange avec de l'eau ou une mise en solution dans l'eau.

24. Procédé selon la revendication 23, **caractérisé par** l'utilisation d'un tambour de dosage (2) ou d'une roue cellulaire ou d'une balance de dosage ou d'un alimentateur linéaire.

25. Procédé selon la revendication 24, **caractérisé par** l'utilisation d'un tambour avec au moins un évidement ou une poche (23) à la périphérie.

26. Procédé selon la revendication 24 ou 25, **caractérisé en ce que** le tambour ou l'alimentateur linéaire, après vidange dans le récipient d'activateur, reste à la position de vidange jusqu'au processus de dosage subséquent.

27. Procédé selon l'une des revendications 24 à 26, **caractérisé en ce que** le tambour est tourné directement après la vidange dans le récipient d'activateur ou bien l'alimentateur linéaire est déplacé, jusqu'à ce que l'évidement du tambour soit fermé par rapport au récipient d'activateur, respectivement que l'ouverture de remplissage de l'alimentateur linéaire soit obturée.

28. Procédé selon la revendication 27, **caractérisé en ce que** le tambour, respectivement l'alimentateur linéaire, est replacé à la position de remplissage directement après la vidange, lorsque ceci est sans dommage pour le concentrat sec.

29. Procédé selon l'une des revendications 24 à 28, **caractérisé en ce que** le tambour est tourné pour procéder à la vidange, jusqu'à ce que l'évidement du tambour forme à la position de vidange une surface d'évacuation oblique.

30. Procédé selon l'une des revendications 24 à 29, **caractérisé en ce que**, après la vidange, le tambour est tourné pour obtenir l'obturation d'ouverture, jusqu'à ce que l'évidement soit situé transversalement par rapport à une ligne passant par le centre de l'ouverture d'évacuation du récipient de stockage et par le centre de l'ouverture d'admission du récipient d'activateur.

31. Procédé selon l'une des revendications 24 à 30, **caractérisé en ce que** le tambour est tourné pour procéder au remplissage jusqu'à ce que l'évidement de la position de remplissage forme une surface d'introduction oblique.

32. Procédé selon l'une des revendications 29 à 31, **caractérisé en ce que** la surface d'introduction oblique ou la surface de sortie reste temporellement inchangée par le blocage du tambour, ou bien est commandée par une modification de la vitesse du tambour.

33. Procédé selon l'une des revendications 26 à 32, **caractérisé par** l'utilisation d'un tambour de dosage (2) ou d'une roue cellulaire, dont l'évidement/poche (23) présente un volume de logement inférieur à la quantité de concentrat sec prévue pour un processus de fabrication.

34. Procédé selon l'une des revendications 26 à 33, **caractérisé par** l'utilisation de tambours de dosage ou de roues cellulaires identiques pour des quantités différentes de concentrat sec, et par la modification des mouvements de dosage pour obtenir une adaptation à la modification des quantités.

35. Procédé selon l'une des revendications 26 à 34, **caractérisé par** l'utilisation d'un moteur pas à pas, pour entraîner les tambours de dosage ou les roues cellulaires.

36. Procédé selon la revendication 29, **caractérisé par** l'utilisation d'un circuit, sélectionné parmi des interrupteurs de fin de course pour la commande pas à pas, des commandes électroniques, une mesure de vitesse de rotation, une mesure d'angle de pivotement et un moteur commandé par des impulsions, ou bien une combinaison de ces divers éléments.

37. Procédé selon l'une des revendications 26 à 36, **caractérisé par** l'utilisation d'un tambour de dosage tournant à droite et/ou à gauche et/ou dont la vitesse de rotation est réglée.

38. Procédé selon l'une des revendications 26 à 37, **caractérisé par** l'utilisation d'un carter de tambour, ayant une ouverture de puits continue et un tambour de dosage disposé avec une mobilité en rotation dans le tambour.

39. Procédé selon l'une des revendications 26 à 38, **caractérisé par** l'utilisation d'un tambour de dosage, couplé à un moteur d'entraînement par l'intermédiaire d'une transmission.

40. Procédé selon la revendication 39, **caractérisé par** l'utilisation d'une liaison à rainure-languette entre le tambour de dosage et la transmission, et/ou par l'utilisation d'une transmission qui forme simultanément une commande de tambour.

41. Procédé selon la revendication 40, **caractérisé par** l'utilisation d'une transmission formée d'un anneau de roues dentées et d'un pignon, montés sur l'arbre d'entraînement du moteur.

42. Procédé selon la revendication 40 ou 41, **caractérisé par** l'utilisation d'une transmission réalisée sous la forme de commande par cames.

43. Procédé selon l'une des revendications 26 à 42, **caractérisé par** l'utilisation d'un joint d'étanchéité et/ou d'un moyen d'étanchéité monté sur le tambour de dosage ou sur l'alimentateur linéaire.

44. Procédé selon la revendication 43, **caractérisé par** l'utilisation d'un joint d'étanchéité en caoutchouc en cas d'utilisation de boulettes et/ou d'un joint d'étanchéité formé d'une matière synthétique thermoplastique, en cas d'utilisation de poudre.

45. Procédé selon la revendication 43 ou 44, **caractérisé par** l'utilisation d'un joint d'étanchéité disposé côté évacuation sur le tambour de dosage, entre l'intervalle existant entre le tambour de dosage et le carter environnant.

46. Procédé selon l'une des revendications 40 à 42, **caractérisé par** l'utilisation d'un joint d'étanchéité composite ou bien d'un joint d'étanchéité monobloc.

47. Procédé selon la revendication 43, **caractérisé par** l'utilisation d'une pièce moulée comme joint d'étanchéité et/ou d'éléments toriques et de lèvres d'étanchéité rectilignes, montées entre les éléments toriques.

48. Procédé selon l'une des revendications 24 à 27, **caractérisé par** l'utilisation d'un alimentateur linéaire formé d'un cylindre avec une tige de piston, déplaçable dans un sens et dans l'autre dans celui-ci, et deux pistons, montés à distance l'un de l'autre sur la tige de piston, le cylindre étant raccordé au réservoir de stockage et le piston, lors de son déplacement de pénétration et de sortie, plongeant dans le réservoir de stockage, de sorte que le concentrat sec pénètre entre les deux pistons et soit extrait du cylindre lors de la course de piston immédiatement suivante.

49. Procédé selon la revendication 48, **caractérisé par** l'utilisation d'un alimentateur linéaire disposé verticalement sous le réservoir de stockage.

50. Procédé selon la revendication 48, **caractérisé par** l'utilisation de deux disques d'étanchéité réalisés sous la forme de piston.

51. Procédé selon la revendication 48 ou 49, **caractérisé par** l'utilisation d'un alimentateur linéaire dont le piston inférieur, en position verticale, est muni d'une pente d'évacuation.

52. Procédé selon l'une des revendications 48 à 50, **caractérisé par** l'utilisation d'une tige de piston formant une pièce moulée par injection en matière synthétique avec les deux pistons.

53. Procédé selon la revendication 50 ou 51, **caractérisé par** l'utilisation d'un piston inférieur qui est réalisé en tant que joint d'étanchéité à membrane et/ou sous forme de champignon et/ou de chapeau ou de cône.

54. Procédé selon la revendication 52 ou 53, **caractérisé par** l'utilisation de pistons en matières synthétiques avec des lèvres d'étanchéité reformées.

55. Procédé selon l'une des revendications 48 à 54, **caractérisé par** l'utilisation de joints d'étanchéité multiples sur un piston et/ou l'utilisation de pistons côté réservoir de stockage, avec une configuration identique à celle du piston inférieur mais en une situation de montage tournée à 180 degrés.

56. Procédé selon l'une des revendications 48 à 55, **caractérisé par** l'utilisation d'un cylindre, formé d'un seul tenant sur le réservoir de stockage, ou par l'utilisation d'un récipient de stockage avec une ouverture d'évacuation cylindrique, adaptée à la tige de piston et au piston.

57. Procédé selon l'une des revendications 48 à 55, **caractérisé par** l'utilisation d'une tige de piston avec un entraînement à courroie ou à chaîne ou avec un entraînement à moteur linéaire ou avec un entraînement à vérin, ou bien un entraînement à pédale ou bien un entraînement à crémaillère.

58. Procédé selon la revendication 57, **caractérisé par** l'utilisation de courroies crantées ou de courroies trapézoidales.

59. Procédé selon l'une des revendications 48 à 58, **caractérisé par** l'utilisation de pistons, dont le piston le plus voisin du réservoir de stockage est muni d'un joint torique et l'autre piston est muni d'un joint d'étanchéité linéaire.

60. Procédé selon l'une des revendications 48 à 58, **caractérisé en ce que** la tige de piston est placée, pour la fermeture du récipient de stockage, en une position à laquelle les deux pistons se trouvent dans le cylindre.

61. Procédé selon l'une des revendications 48 à 60, **caractérisé par** l'utilisation d'une bouteille posée sur le réservoir de stockage, dont le col de bouteille forme le cylindre.

62. Procédé selon l'une des revendications 48 à 61, **caractérisé par** l'utilisation d'une partie de guidage et/ou une partie d'introduction placée à l'avant du cylindre.

63. Procédé selon l'une des revendications 1 à 62, **caractérisé par** l'utilisation d'une ou de plusieurs buses d'eau (12, 19) dans le récipient d'activateur, pour effectuer un mouillage préliminaire et/ou un mélange et/ou un nettoyage.

64. Procédé selon la revendication 63, **caractérisé en ce que** l'eau et le concentrat sec sont fournis de façon alternée.

65. Procédé selon la revendication 64, **caractérisé en ce qu'**un mélange s'effectue entre les intervalles d'addition.

66. Procédé selon l'une des revendications 63 à 65, **caractérisé par** l'utilisation de buses (19) sur le fond de réservoir et/ou sur le bord de réservoir et/ou de buses placées dans le couvercle de réservoir et/ou dans la paroi de réservoir et/ou dans le réservoir.

67. Procédé selon la revendication 63, **caractérisé en ce que**, d'abord, on ajoute le concentrat sec dans le réservoir d'activateur (3) et on actionne ensuite les buses à eau (19) situées dans ou sur le fond de réservoir.

68. Procédé selon l'une des revendications 63 à 67, **caractérisé en ce que** l'on injecte de l'eau jusqu'à obtenir un niveau de remplissage provisoire dans le récipient d'activateur (3).

69. Procédé selon l'une des revendications 1 à 68, **caractérisé en ce que**, après écoulement du temps d'activation, on effectue un autre déplacement du bain, de la suspension ou de la solution, dans le récipient d'activateur (3).

70. Procédé selon les revendications 63 à 69, **caractérisé par** un actionnement des buses à eau (12, 19) pour obtenir un déplacement supplémentaire du bain et un mélange.

71. Procédé selon la revendication 70, **caractérisé en ce que** la quantité d'eau, utilisée pour le déplacement du bain et le mélange, est utilisée, en totalité ou partiellement, d'abord pour l'activation des enzymes et des bactéries, ou de l'eau étant simultanément extraite à un autre endroit.

72. Procédé selon l'une des revendications 63 à 71, **caractérisé par** un actionnement des buses à eau (12, 19) pour obtenir le nettoyage.

73. Procédé selon l'une des revendications 63 à 72, **caractérisé par** l'utilisation de buses (12, 19) orientées obliquement et/ou tangentiellement.

74. Procédé selon l'une des revendications 63 à 73, **caractérisé par** l'utilisation de buses (12, 19) qui sont tournées vers les parois du réservoir et/ou dans l'évacuation de réservoir (16).

75. Procédé selon l'une ou plusieurs des revendications 63 à 74, **caractérisé par** l'alimentation, continue ou par intervalles, des buses (12, 19) avec de l'eau.

76. Procédé selon l'une des revendications 1 à 75, **caractérisé par** la commande de l'amenée d'eau dans le réservoir d'activateur, au moyen d'un interrupteur de niveau (17) et/ou d'une minuterie à contact.

77. Procédé selon la revendication 76, **caractérisé par** l'utilisation d'un interrupteur à flotteur, ou bien d'un interrupteur capacitif, disposé extérieurement sur le réservoir d'activateur.

78. Procédé selon l'une des revendications 1 à 77, **caractérisé par** l'utilisation d'un réservoir d'activateur muni d'un déversoir ou d'une fermeture par bouchon.

79. Procédé selon l'une des revendications 2 à 78, **caractérisé par** l'utilisation d'un tamis en amont de l'évacuation/ouverture de sortie du réservoir d'activateur, lorsque des boulettes et/ou des grains de concentrat sont utilisés.

80. Procédé selon la revendication 78 ou 79, **caractérisé par** l'utilisation d'un bouchon creux (13) sur le réservoir de stockage (16) dont l'extrémité ouverte, sortant vers le haut, tubulaire, détermine en tant que déversoir la valeur du niveau de remplissage maximal.

81. Procédé selon la revendication 80, **caractérisé par** l'utilisation d'un recouvrement (18) conique du déversoir.

82. Procédé selon l'une des revendications 2 à 81, **caractérisé par** l'utilisation d'un réservoir d'activateur pour lequel la sortie de réservoir n'est pas disposée précisément verticalement sous l'alimentation en concentrat sec.

83. Procédé selon l'une des revendications 2 à 82, **caractérisé par** utilisation d'un distributeur de concentrat.

84. Procédé selon la revendication 83, **caractérisé par** l'utilisation d'une surface d'impact pour la distribution du concentrat.

85. Procédé selon la revendication 84, **caractérisé par** l'utilisation d'une surface d'impact de pourtour.

86. Procédé selon l'une ou plusieurs des revendications 1 à 85, **caractérisé par le fait qu'**on effectue également un déplacement vertical du bain.

87. Procédé selon l'une ou plusieurs des revendications 1 à 86, **caractérisé par** l'utilisation d'éléments centrifuges de pompage tournant horizontalement et/ou de rotors de pompe et/ou de roues de pompe.

88. Procédé selon la revendication 87, **caractérisé par** l'utilisation d'éléments centrifuges de pompage/rotors/roues disposés sur le fond du réservoir et adaptés au fond du réservoir.

89. Procédé selon la revendication 87 ou 88, **caractérisé en ce que** l'écoulement horizontal est dévié pour devenir un écoulement vertical.

90. Procédé selon l'une des revendications 87 à 89, **caractérisé par** l'utilisation d'éléments centrifuges de pompage/rotors/roues dont le rapport, entre la hauteur au-dessus du fond de réservoir et la hauteur du réservoir, est au minimum d'environ 1:30 et au maximum de 1:3.

91. Procédé selon la revendication 90, **caractérisé par** l'utilisation d'éléments centrifuges de pompage/de rotors/ de roues dont la hauteur est de 10 à 30 mm.

92. Procédé selon l'une des revendications 87 à 91, **caractérisé par** l'utilisation de deux pompes centrifuges /rotors/roues disposés les uns au-dessus des autres, dont celui qui est en position supérieure est conçu pour la mise en circulation ou le mélange, et celui qui est en position inférieure est conçu pour le pompage d'évacuation.

93. Procédé selon la revendication 92, **caractérisé par** l'utilisation en un arbre/axe sur lequel sont montés les deux éléments centrifuges de pompage/rotors/roues, chaque élément centrifuge/rotor/roue ayant l'effet de transfert dans un autre sens de direction et effectuant une rotation libre en cas de rotation dans le sens dans lequel aucun transfert n'est effectué.

94. Procédé selon les revendications 87 à 93, **caractérisé par** l'utilisation d'éléments centrifuges de pompage/de rotors/de roues ayant des ailettes cintrées, les ailettes d'un premier élément centrifuge/rotor/roue étant coudées vers l'autre élément centriluge/roter/roue, dans la direction périphérique opposée.

95. Procédé selon la revendication 94, **caractérisé par** l'utilisation d'ailettes ayant un rayon de courbure au moins égal à 1/4 du diamètre d'éléments centrifuges/rotors/roues et au plus égal à 1/2 du diamètre d'éléments centrifuges/rotors/roues.

96. Procédé selon les revendications 87 à 95, **caractérisé par** l'utilisation de garnissages et/ou de profilés, assurant le guidage de l'écoulement dans le réservoir d'activateur.

97. Procédé selon la revendication 96, **caractérisé par** l'utilisation de nervures, s'étendant verticalement sur la face intérieure du réservoir et qui pénètrent dans le réservoir d'activateur d'une certaine distance (hauteur) qui est au maximum de 10 % et/ou au maximum de 50 % du rayon du réservoir à activateur.

98. Procédé selon la revendication 96 ou 97, **caractérisé par** l'utilisation de nervures s'achevant à distance du bord supérieur du réservoir.

99. Procédé selon l'une des revendications 96 à 98, **caractérisé par** l'utilisation de nervures dont l'espacement vis-à-vis du bord de réservoir supérieur est au moins égal à 1/4 du diamètre de réservoir.

100. Procédé selon l'une des revendications 96 à 99, **caractérisé par** l'utilisation de nervures d'une longueur au maximum égale à 3/4 du diamètre de réservoir et/ou commençant depuis le fond de réservoir.

101. Procédé selon l'une des revendications 1 à 100, **caractérisé par** la conservation d'un diamètre de réservoir constant et l'adaptation de la hauteur de réservoir et/ou de la longueur du réservoir à un volume de réservoir et/ou à une longueur de réservoir souhaitée qui est au maximum égale à huit fois le diamètre de réservoir.

102. Procédé selon la revendication 101, **caractérisé en ce qu'**on utilise un réservoir d'activateur, dont le diamètre de réservoir est compris entre 100 et 300 mm.

103. Procédé selon l'une des revendications 1 à 102, **caractérisé en ce que** la suspension/solution est évacuée par pompage, après atteinte d'une croissance souhaitée des enzymes et de bactéries.

104. Procédé selon l'une des revendications 86 à 103, **caractérisé en ce qu'**une même pompe est utilisée pour le déplacement vertical du bain, ainsi que pour l'évacuation par pompage, et inversement.

105. Procédé selon l'une des revendications 87 à 104, **caractérisé en ce qu'**on utilise des éléments centrifuges/rotors/roues qui sont munis en partie haute d'un disque en forme d'anneau.

106. Procédé, selon la revendication 105, **caractérisé par** l'utilisation de disques en forme d'anneaux, laissant libre centralement une ouverture, étant délimités et/ou formant des canaux avec le bord de l'élément centrifuge/du rotor/ de la roue.

107. Procédé selon l'une des revendications 87 à 106, **caractérisé par** l'utilisation de deux organes de pompage, disposés l'un au-dessus de l'autre dans le réservoir d'activateur, dont l'organe inférieur est prévu pour le guidage et l'organe supérieur pour la mise en circulation, respectivement le mélange.

108. Procédé selon l'une des revendications 87 à 107, **caractérisé par** l'utilisation d'un réservoir d'activateur qui entoure l'organe de pompage inférieur par un canal en forme d'anneau, pour recevoir le liquide.

109. Procédé selon l'une des revendications 105 à 108, **caractérisé par** l'utilisation de pompes, dont l'ouverture centrale et/ou le canal est/sont muni(s) d'un couvercle en tamis au moins dans la zone de l'ouverture d'aspiration.

110. Procédé selon l'une des revendications 105 à 109, **caractérisé par** l'utilisation d'un réservoir d'activateur entourant les deux organes de pompage par une nervure s'achevant sur le disque en forme d'anneau de l'organe de pompage inférieur.

111. Procédé selon l'une des revendications 87 à 110, **caractérisé par** l'utilisation d'organes de pompage, dont un organe de pompage est muni d'un tube et l'autre organe de pompage est monté sur le tube.

112. Procédé selon la revendication 111, **caractérisé en ce que** de l'air est guidé à travers le tube, pour être introduit dans la suspension ou la solution.

113. Procédé selon l'une des revendications 87 à 112, **caractérisé en ce que** la vitesse de rotation de la pompe est maintenue à une valeur inférieure à 1500 tours/mn, au moins pendant le processus de mise en circulation.

114. Procédé selon la revendication 113, **caractérisé en ce que** la vitesse de rotation de la pompe est maintenue à une valeur inférieure à 500 tours/mn.

115. Procédé selon la revendication 114, **caractérisé en ce que** la vitesse de rotation de la pompe est maintenue entre 100 et 300 tours/mn.

116. Procédé selon l'une des revendications 87 à 115, **caractérisé en ce que** la vitesse de rotation de la pompe est augmentée pour procéder au pompage d'évacuation.

117. Procédé selon l'une des revendications 87 à 116, **caractérisé par** l'utilisation d'une pompe à vitesse de rotation réglable.

118. Procédé selon l'une des revendications 3 à 117, **caractérisé en ce que** l'air, prévu pour l'activation des enzymes et des bactéries, est aspiré en même temps par l'organe de pompage prévu pour la mise en circulation ou le mélange et/ou ajouté de façon dosée par une pompe séparée.

119. Procédé selon la revendication 118, **caractérisé par** l'utilisation d'une conduite d'air, menant jusqu'à la zone de vide de l'organe de pompage pour la mise en circulation.

120. Procédé selon l'une des revendications 2 à 114, **caractérisé par** un agencement incliné du réservoir d'activateur.

121. Procédé selon l'une des revendications 1 à 120, **caractérisé par** l'utilisation de matériaux résistant aux bactéries et résistant aux enzymes.

122. Procédé selon la revendication 121, **caractérisé par** l'utilisation de téflon et/ou polyéthylène(PE) et/ou polypropylène (PP) et/ou de polyoxyméthylène (POM), sous forme injectée, et/ou d'acier spécial pour former une ou plusieurs parties du dispositif.

123. Procédé selon l'une des revendications 1 à 122, **caractérisé en ce que**, dans le cas où l'appareil est agencé en amont d'un siphon, en observant dans la direction d'écoulement des eaux usées, le siphon est rincé par une circulation faite au moins à une reprise, lors de ou après l'évacuation de la suspension ou de la solution.

124. Procédé selon l'une ou plusieurs des revendications 1 à 123, **caractérisé par** l'utilisation d'agents antibloquants dans le concentrat sec.

125. Procédé selon la revendication 118, **caractérisé par** l'utilisation de pierre ponce ou de craie, en tant qu'agent antibloquant.
